# EUROPÄISCHE PATENTSCHRIFT

(11) **EP 1 646 858 B1**
(45) Veröffentlichungstag und Bekanntmachung des Hinweises auf die Patenterteilung: **22.09.2010**
(21) Anmeldenummer: 04740511.3
(22) Anmeldetag: 01.07.2004
(51) Int. Cl.: G01N 21/25, G01N 21/47

(54) **REMISSIONSSENSOR ZUR MESSUNG FLÜSSIGER PIGMENTPRÄPARATIONEN ODER FESTER PIGMENTIERTER OBERFLÄCHEN**
REFLECTANCE SENSOR FOR MEASURING LIQUID PIGMENT PREPARATIONS OR SOLID PIGMENTED SURFACES
CAPTEUR DE REFLEXION SPECTRALE SERVANT A MESURER LA REFLEXION SPECTRALE DE PREPARATIONS PIGMENTEES LIQUIDES OU DE SURFACES PIGMENTEES SOLIDES

(30) Priorität: 07.07.2003 DE 10330641
(43) Veröffentlichungstag der Anmeldung: 19.04.2006
(73) Patentinhaber: BASF Coatings GmbH, 48165 Münster (DE)
(72) Erfinder: BERG, Jan, 48165 Münster (DE); LOHMANN, Jürgen, 48165 Münster (DE); SCHÄFER, Michael, 67122 Altrip (DE); ETTMÜLLER, Jürgen, 67454 Hassloch (DE)
(74) Vertreter: Isenbruck, Günter
(86) Internationale Anmeldenummer: PCT/EP2004/007141
(87) Internationale Veröffentlichungsnummer: WO 2005/003740

(56) Entgegenhaltungen:
- WO-A-02/075285
- US-A- 4 029 419
- US-A- 4 033 698

## Beschreibung

Die Erfindung betrifft Remissionssensoren aufgebaut aus einer optischen Einheit, einer Probenanalyseeinheit und einer System-Kontrolleinheit sowie ein Verfahren zur Messung der Remission einer Probe in Form einer flüssigen Pigmentpräparation und die Verwendung eines erfindungsgemäßen Remissionssensors zur Messung der Remission von flüssigen Pigmentpräparationen in verschiedenen Verfahrensstufen während der Herstellung, Weiterverarbeitung und Anwendung der flüssigen Pigmentpräparationen.

Bei der Herstellung von flüssigen Pigmentpräparationen wie Lack- oder Emaillemischungen, Pigmentpasten, Weißabmischungen oder anderen Farbmischungen ist eine reproduzierbare Farbe und Deckkraft der Mischungen wesentlich. Diese Reproduzierbarkeit wird durch regelmäßige Produktkontrolle bei der Herstellung der flüssigen Pigmentpräparationen entweder visuell oder mit Hilfe spektroskopischer Methoden gewährleistet. Gemäß dem Stand der Technik erfolgt die Kontrolle durch Mischen der gewünschten Farbmischungen, Aufbringen auf ein Substrat und Trocknen, Härten oder Einbrennen und anschließende Analyse der erhaltenen farbigen Schichten. Dieses Verfahren ist zwar genau, jedoch sehr zeitaufwendig.

Eine wesentliche Zeitersparnis kann dadurch erzielt werden, dass die Messung direkt an den flüssigen Pigmentpräparationen erfolgt, so dass ein Aufbringen von farbigen Schichten auf ein Substrat und anschließendes Trocknen der Schichten nicht erforderlich ist.

Grundsätzlich sind für diese Aufgabe alle kommerziellen Farbmessgeräte geeignet. Jeder in Remission arbeitende VIS-Sensor ist ebenfalls dazu geeignet.

So betrifft EP-A 0 472 899 eine photometrische Messeinrichtung zur Messung des Dämpfungsgrades bei der Lichtausbreitung in dispersen Systemen. Diese Einrichtung ist aus einer durchströmbaren Küvette für die zu untersuchende Probe mit mindestens einer seitlichen Öffnung zum optischen Anschluss mindestens eines Lichtwellenleiters aufgebaut. Von einer Lichtquelle führt eine Lichtwellenleiterverbindung an das Innere der Küvette mit der zu untersuchenden Probe und von dort zu einem Lichtdetektor zur Erzeugung eines Messsignals. Eine direkte Lichtwellenleiterverbindung führt von der Lichtquelle direkt zum Lichtdetektor zur Erzeugung eines Referenzsignals. Des weiteren umfasst die photometrische Einrichtung ein an den Lichtdetektor angeschlossenes Auswertegerät.

WO 98/16822 betrifft ein Analysesystem zur Analyse der physikalischen Eigenschaften von Lacken, Pigmentpasten oder ähnlichen Systemen, das aus einer Vorrichtung zur Ausbildung eines Films der Lacke, Pigmentpasten und ähnlichen Systemen mit einer spezifischen Dicke, einer Lichtquelle zum Bestrahlen des zu untersuchenden Lacks oder der zu untersuchenden Pigmentpaste oder ähnlichen Systemen aufgebaut ist, wobei eine Wechselwirkung zwischen dem Licht und dem Lack, der Pigmentpaste oder ähnlichen Systemen auftritt, wobei ein Messsignal erzeugt wird; und einer Vorrichtung zur Aufnahme des Messsignals sowie einem mit der Vorrichtung zur Aufnahme des Messsignals verbundenen Detektor aufgebaut ist.

WO 02/075285 betrifft eine Vorrichtung zur Messung von flüssigen Präparationen, die eine Probenanalysezelle mit einer Aussparung darin aufweist, wobei diese von zwei lichtdurchlässigen Fenstern eingefasst wird. Diese Fenster werden durch einen Abstandhalter positioniert, wodurch eine Kammer zur Analyse der flüssigen Präparation bereitgestellt wird, wobei die flüssige Präparation zwischen den beiden Fenstern fließt. Die Vorrichtung gemäß WO 02/075285 ist zur Messung von flüssigen Präparationen durch Transmission und/oder Reflexion geeignet.

US 4,029,419 betrifft ein Spektrometer zur Messung und Analyse der Farben von Materialien, wie beispielsweise Textilien. Dazu wird eine Probe von einer Halterung gehalten und durch polychromatisches Licht belichtet.

US 4,033,698 betrifft - wie US 4,029,419 - eine Vorrichtung zur Analyse der Farbe einer Textilprobe.

Nachteilig an diesen Systemen ist die unzureichende Messgenauigkeit, die mit den aus dem Stand der Technik bekannten Messanordnungen erzielt werden kann.

Aufgabe der vorliegenden Erfindung ist es daher, einen Remissionssensor sowie ein Verfahren zur Messung der Remission von Produkten, das sich durch eine hohe Messgenauigkeit auszeichnet und schnell und zuverlässig geeignete Messdaten zur Ermittlung der Farbe und Deckkraft der flüssigen Pigmentpräparationen bereitstellt, sowie die Bereitstellung verschiedener Verfahren zur Messung der Remission von Pigmentpräparationen unter Nutzung des erfindungsgemäßen Messverfahrens.

Die Farbmetrik an sich ist Stand der Technik. Wenn diese Vorgehensweisen hier erläutert werden, dann nur, um klarzustellen, dass dieser Sensor für alle diese Methoden geeignet ist. Eine Remissionsmessung liefert zunächst das Remissionsspektrum des Produktes, das dann auf das Remissionsspektrum eines Weißstandards bezogen wird. Aus dieser normierten Remission können dann auch die häufig zur Beschreibung von Farbe verwendeten Lab-Werte berechnet werden. Eine Remissionsmessung liefert nicht unmittelbar die Deckkraft, bzw. die so genannten Absorptions- und Streuspektren einer Pigmentpräparation. Durch Vermessen der Präparation in nicht deckender Schichtstärke über Schwarz und über Weiß, bzw. durch Vermessen von Weißabmischungs- und Schwarzabmischungsreihen, können diese Werte aber ermittelt werden.

Diese Aufgabe wird durch einen Remissionssensor gelöst, aufgebaut aus
a) einer optischen Einheit, die
   aa) eine Lichtquelle in Form einer Lampe, und
   ab) eine Faseroptik umfassend Lichtwellenleiter, wobei mindestens ein Lichtwellenleiter ein Referenzleiter ist,
      umfasst,
b) einer Probenanalyseeinheit, die
   ba) ein Messfenster, und
   bb) eine Probenanalysezelle,
      umfasst,
      wobei auf einer Seite des Messfensters die optische Einheit angeordnet ist und auf der anderen Seite des Messfensters die Probenanalysezelle angeordnet ist, indem diese so an das Messfenster angepresst ist, dass ein Spalt zwischen Messfenster und Probenanalysezelle gebildet wird, den eine zu messende Probe in Form einer flüssigen Pigmentpräparation durchqueren muss, wobei bei der Durchquerung des Spalts eine erhebliche Scherung der Probe erfolgt,
      und
c) einer System-Kontrolleinheit umfassend Detektoren zur Aufnahme von Messdaten und ein daran angeschlossenes Auswertegerät,
   wobei mindestens eine Lichtwellenleiterverbindung von der Lichtquelle zu dem Messfenster und von dem Messfenster weiter zum Detektor geführt wird, zur Erzeugung eines Messsignals (Remission des Produkts), und mindestens eine Referenzleiterverbindung direkt von der Lichtquelle zum Detektor oder vom Messfenster zum Detektor geführt wird, zur Erzeugung eines Referenzsignals (interner Reflex), wobei die Probenanalysezelle abnehmbar ist.

Bei der Remission wird dabei das Licht gemessen, welches an der Grenzfläche zum Messfenster eines den Lichtwellenleiter abschließenden transparenten Flächenelements diffus reflektiert wird, aber in der Regel nicht der Reflex der Grenzfläche selbst. Dieser bildet aber einen Störuntergrund, der im Allgemeinen zwischen 1 % und 0,001 % der Weißremission liegt.

Das heißt der direkte Reflex der Beleuchtung an der Scheibe sollte nicht von der Empfangsfaser gesehen werden, die das vom Produkt gestreute Licht empfängt, da dies zu einem sehr hohen, unerwünschten Untergrundanteil führt. Der direkte Reflex kann aber sehr wohl in einer weiteren Faser empfangen werden, und kann als (zusätzliche oder einzige) Überwachung der Beleuchtungsintensität dienen.

Unter "flüssigen Pigmentpräparationen" sollen alle zur Remissionsmessung mit dem erfindungsgemäßen Remissionssensor geeigneten Pigmentpräparationen verstanden werden. Der erfindungsgemäße Remissionssensor eignet sich zur Messung von flüssigen Pigmentpräparationen, die in verschiedenen Verfahrensstufen der Herstellung, Weiterverarbeitung und Anwendung der flüssigen Pigmentpräparationen vorliegen. Der erfindungsgemäße Remissionssensor kann zum Beispiel zur Beurteilung von flüssigen Pigmentpräparationen während ihres Herstellungsverfahrens eingesetzt werden oder zur Beurteilung der Qualität der flüssigen Pigmentpräparationen bei ihrer Anwendung (zum Beispiel zur Farbanpassung in einer Lackieranlage) oder zur Kontrolle nachträglicher Farbänderungen der flüssigen Pigmentpräparationen durch Lagerung oder Scherung.

Dabei ist unter "Farbe" die Absorption + Streuung der Pigmentpräparationen zu verstehen. Typische "flüssige Pigmentpräparationen" ("pigmentierte" Präparation) sind Lacke und Farben sowie Pasten, und generell Beschichtungen.

Solche "flüssigen Pigmentpräparationen" sind bevorzugt Lack- oder Emaillemischungen, Pigmentpasten, Weißabmischungen oder andere Farbmischungen oder Mischungen enthaltend Effektpigmente wie Micas oder Metallics, d. h. Aluflakes, die in Form einer Suspension oder Emulsion vorliegen.

Es ergeben sich für viele Produkte erhebliche Kostenvorteile, wenn die Remission bereits an der flüssigen Präparation bestimmt werden kann, insbesondere bei Lacken.

Die Remissionsmessung an flüssigen Produkten hat einen zusätzlichen Anwendungsbereich, da auch bei "sonstigen" Produkten, die nicht unmittelbar für die Erzeugung von Oberflächen (als Beschichtung oder als Oberfläche eines Bauteils) bestimmt sind, aus der Remission spezielle Produkt- und Prozesseigenschaften ermittelt werden können, die in Bezug auf den dispersen Zustand (z. B. Partikelgrößenverteilung, Form, Konzentration) oder auf Materialeigenschaften (z. B. Brechungsindex, Kristallmodifikation, chemische Zusammensetzung) interpretiert werden können.

Dabei muss unterschieden werden, ob es sich um konventionelle Präparationen (konventionelle Lacke, "UNI", mit isometrischen Pigmenten bzw. isometrischen "sonstigen" Partikeln) handelt, oder um Präparationen mit Effektstoffen (z. B. Metallics, d. h. Aluflakes, oder Effektpigmente wie Micas, bzw. nichtisometrische, d. h. nadel- oder plättchenförmige "sonstige" Partikeln), die nach der Verarbeitung in einer ausgerichteten Form vorliegen.

### Kurze Beschreibung der Figuren

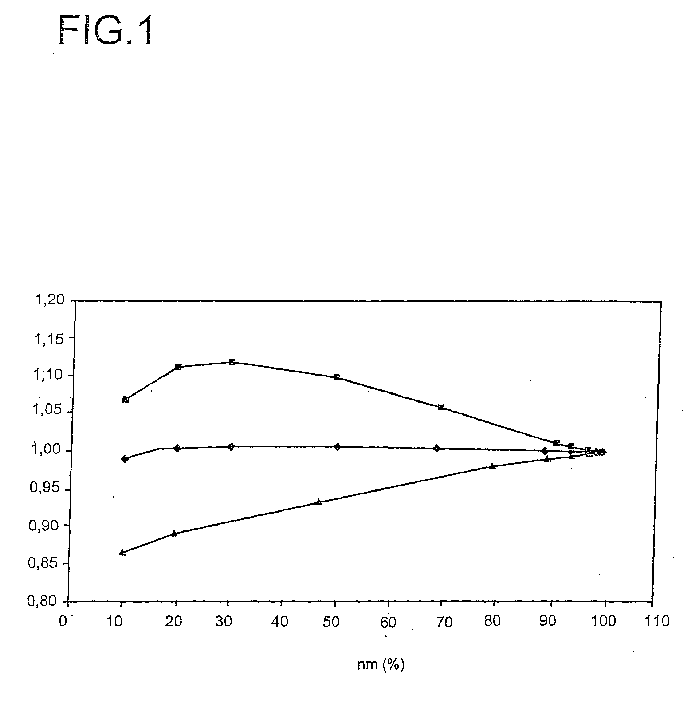

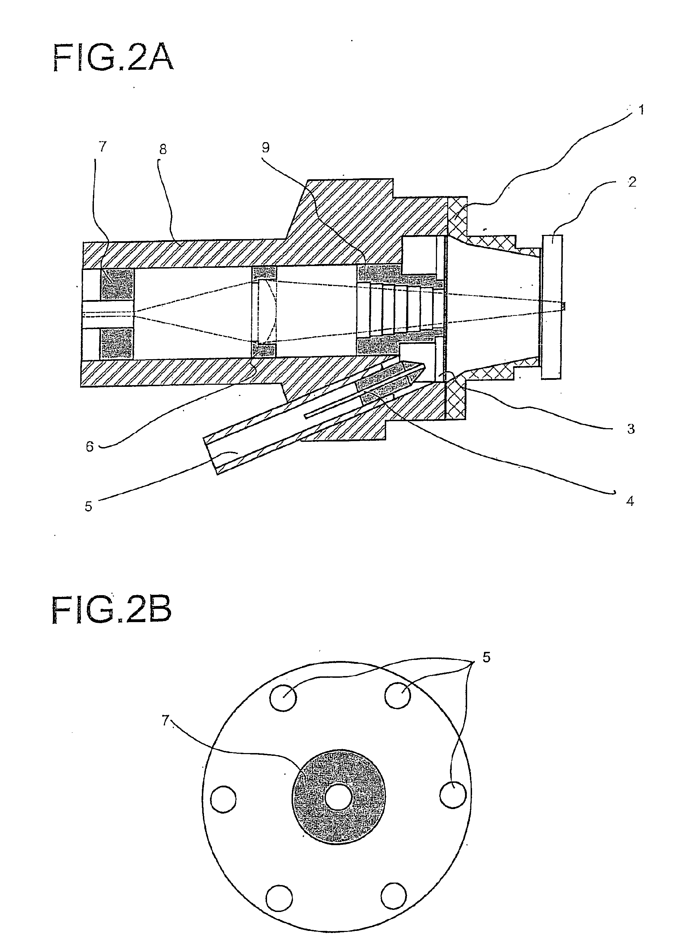

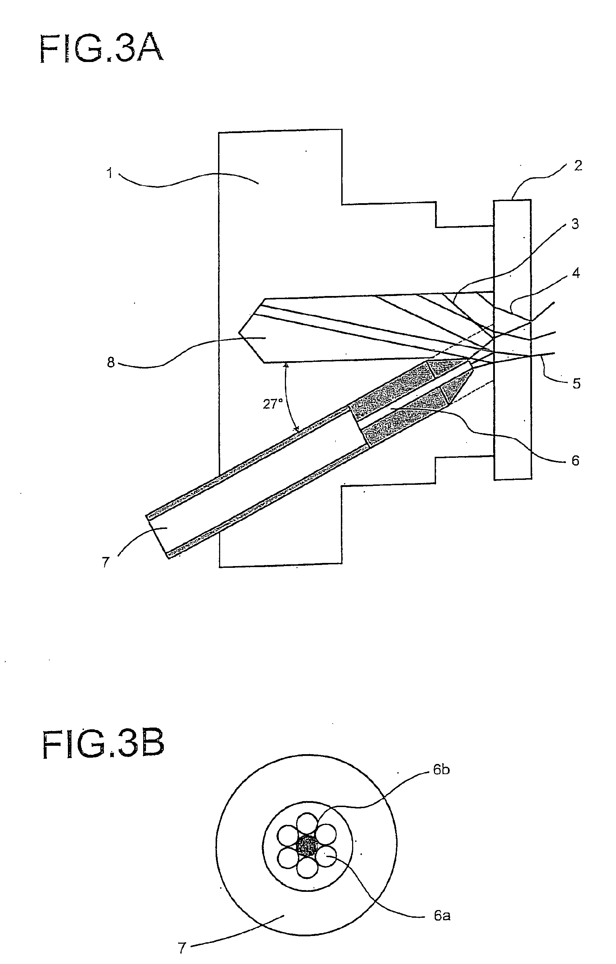

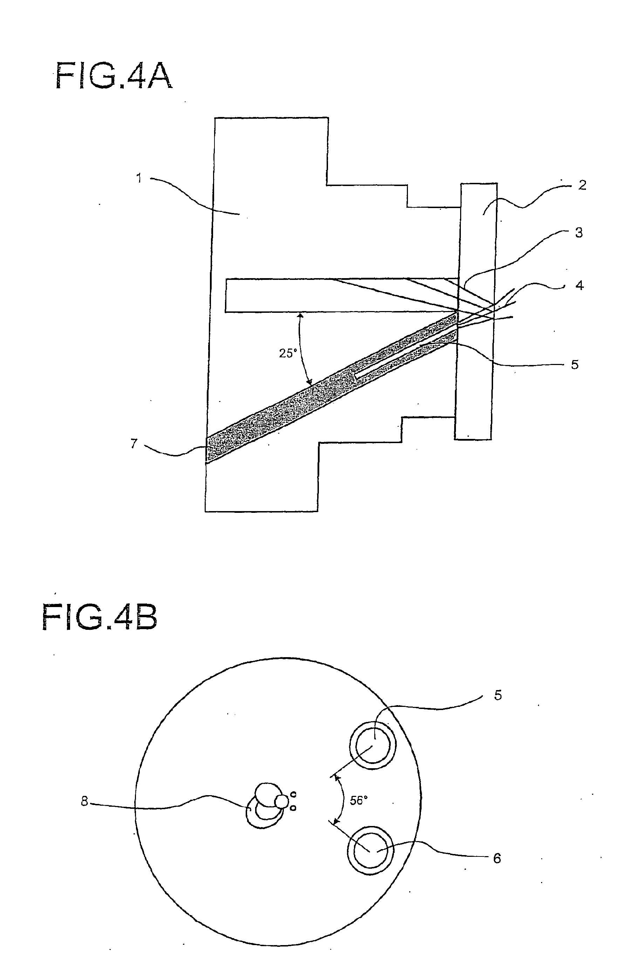

In Figur 1 sind die Kennlinien für verschiedene Sensorköpfe (Geometrien) dargestellt. Dabei ist auf der Abszisse die Wellenlänge in nm und auf der Ordinate die relative Transmission dargestellt. Der unterste Graph (Dreiecke) zeigt die Kennlinie für die in Figur 3 dargestellte Geometrie, der mittlere Graph (Rauten) die Kennlinie für die in Figur 4 dargestellte Geometrie und der oberste Graph (Quadrate) die Kennlinie für die in Figur 2 dargestellte Geometrie.

Die Figuren 2 bis 4 zeigen drei mögliche bevorzugte Geometrien von Beleuchtungs- und Empfangsfasern.

In Figur 2a und 2b ist eine geometrische Konstruktion von Beleuchtungs- und Empfangsfasern in dem erfindungsgemäßen Remissionssensor dargestellt, worin der Winkel zwischen Beleuchtungs- und Empfangsfaser(n) 22° beträgt und der Neigungswinkel der Empfangsfaser(n) zur Plattenachse 0°. Die Beleuchtungsfaser(n) sind zirkular um die Empfangsfaser(n) angeordnet (=Sensor 0°/22° zirkular). Figur 2a zeigt eine Seitenansicht der Fasergeometrie des Remissionssensors und Figur 2b zeigt eine Aufsicht, wobei die zirkulare Anordnung der Beleuchtungsfaser(n) erkennbar ist.

In Figur 3a und 3b ist eine geometrische Konstruktion von Beleuchtungs- und Empfangsfaser(n) in dem erfindungsgemäßen Remissionssensor dargestellt, worin der Winkel zwischen Beleuchtungs- und Empfangsfaser(n) 0° beträgt und der Neigungswinkel der Empfangsfaser(n) zur Plattenachse 27°. Die Beleuchtungs- und Empfangsfaser(n) sind zirkular um die Plattenachse angeordnet (Sensor 27°/0° zirkular). Figur 3a zeigt eine Seitenansicht der Fasergeometrie des Remissionssensors und Figur 3b zeigt eine Aufsicht, wobei die zirkulare Anordnung von Beleuchtungs- und Empfangsfaser(n) erkennbar ist.

In Figur 4a und 4b ist eine geometrische Konstruktion von Beleuchtungs- und Empfangsfasern in dem erfindungsgemäßen Remissionssensor dargestellt, worin der Winkel zwischen Beleuchtungs- und Empfangsfaser(n) 56° beträgt und der Neigungswinkel der Beleuchtungsfaser(n) zur Plattenachse 25° (= Sensor 25°/56°). Figur 4a zeigt eine Seitenansicht der Fasergeometrie des Remissionssensors und Figur 4b zeigt eine Aufsicht, wobei der Winkel zwischen Beleuchtungs- und Empfangsfaser(n) erkennbar ist.

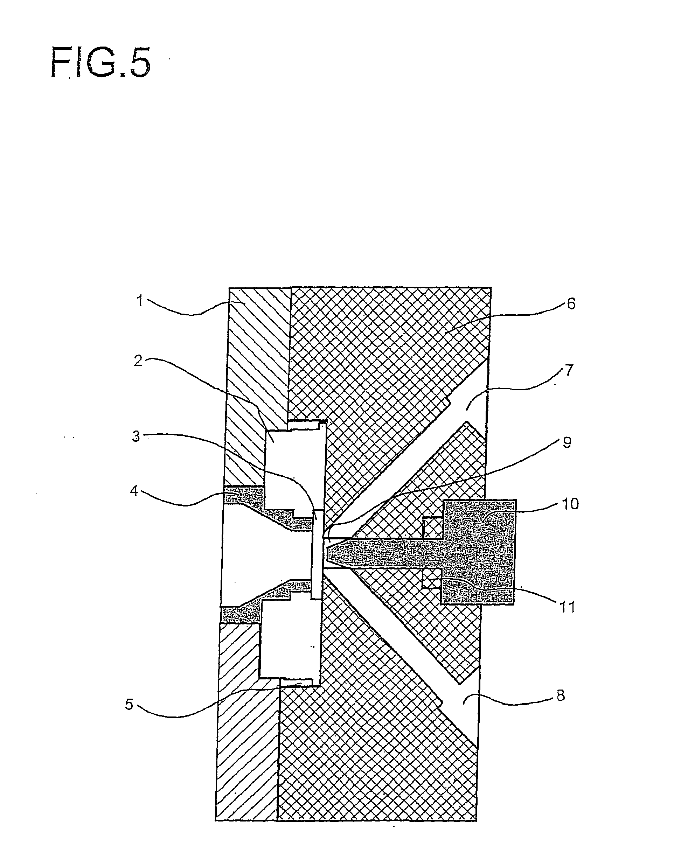

In Figur 5 ist eine bevorzugte Ausführungsform einer Produktzelle zur Remissionsmessung an flüssigen Pigmentpräparationen (Nassmessung), umfassend die Probenanalysezelle, das Messfenster sowie eine Halterung (Stütze) für die Faseroptik der optischen Einheit dargestellt.

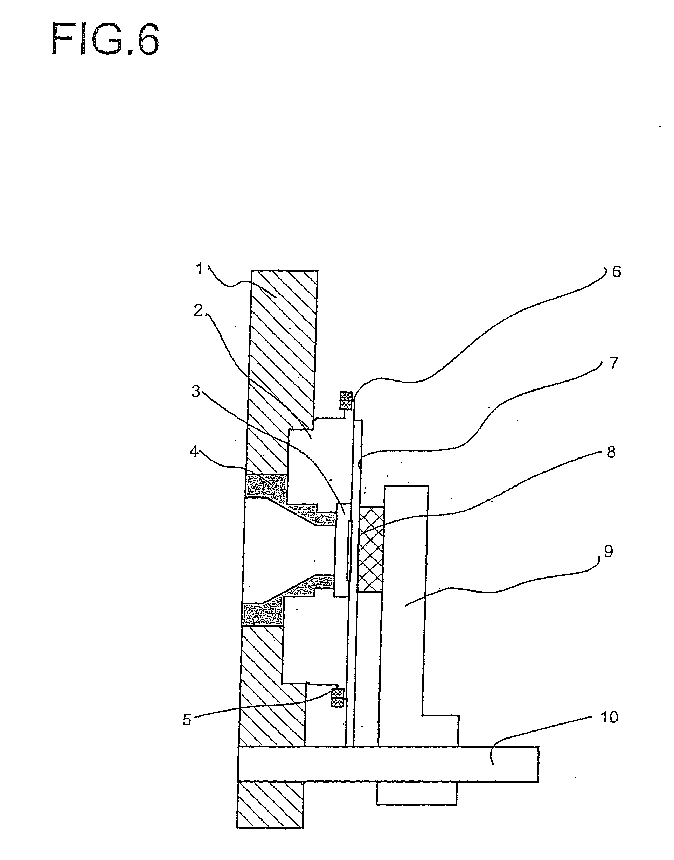

In Figur 6 ist eine bevorzugte Ausführungsform einer so genannten Blechzelle zur Remissionsmessung an festen pigmentierten Oberflächen (Trockenmessung), umfassend die Halterung für Proben, die eine feste Oberfläche aufweisen, das Messfenster sowie eine Halterung (Führungselement) für die Faseroptik der optischen Einheit dargestellt.

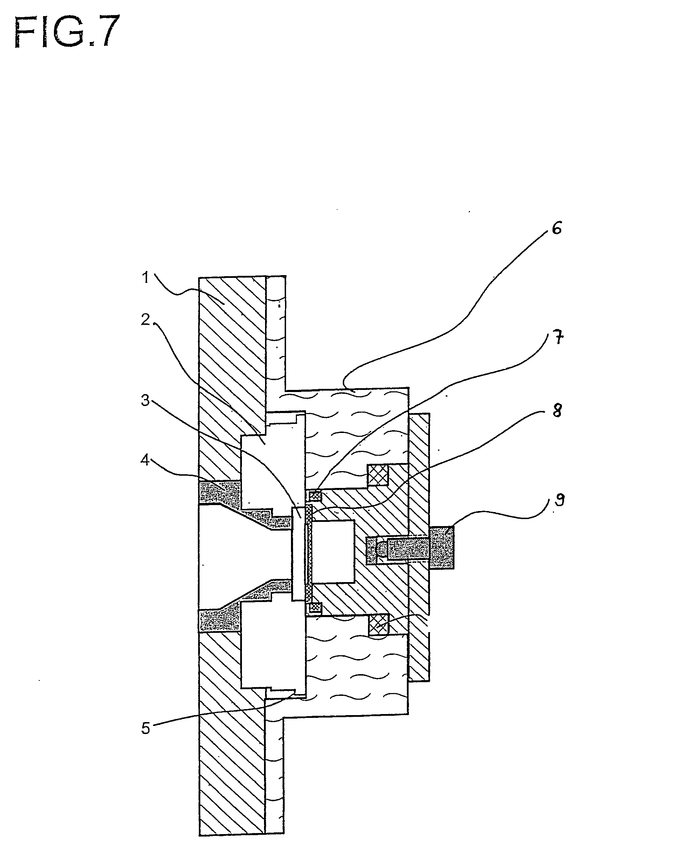

In Figur 7 ist eine bevorzugte Ausführungsform einer so genannten Referenzzelle zur Remissionsmessung des Referenzstandards (bevorzugt eine weiße Glasscheibe) (Trockenmessung), umfassend die Halterung für den Referenzstandard, das Messfenster sowie eine Halterung (Führungselement) für die Faseroptik der optischen Einheit dargestellt.

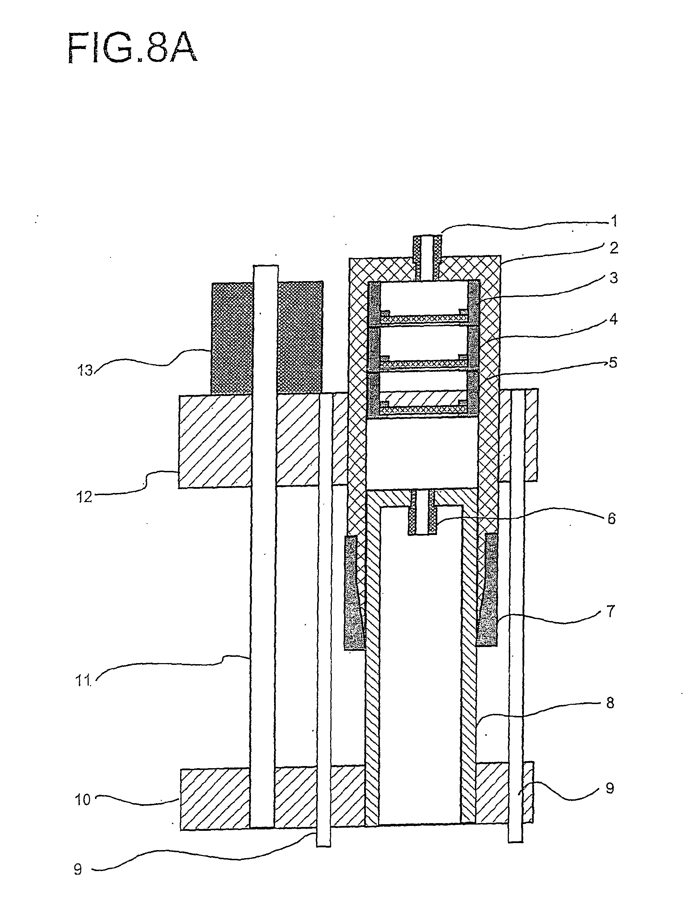

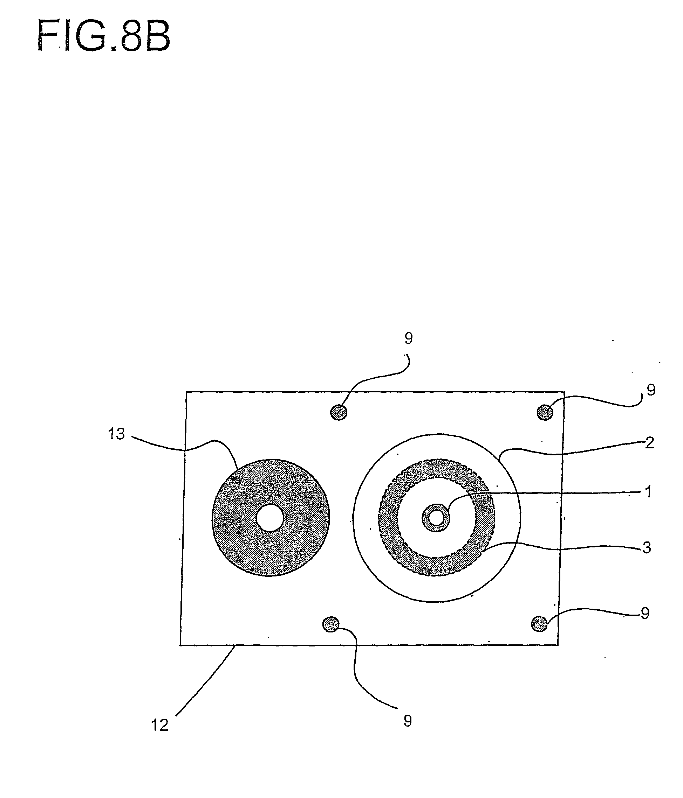

In Figur 8a und 8b ist eine besonders bevorzugte Ausführungsform eines Dämpfers dargestellt. In Figur 8a ist die Vorderansicht des Dämpfers dargestellt und in Figur 8b die Aufsicht.

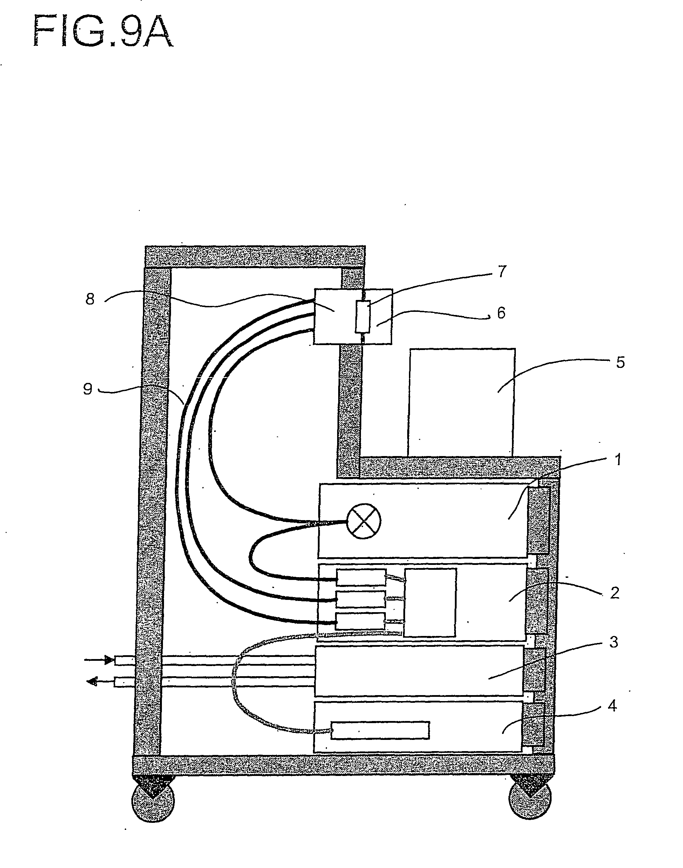

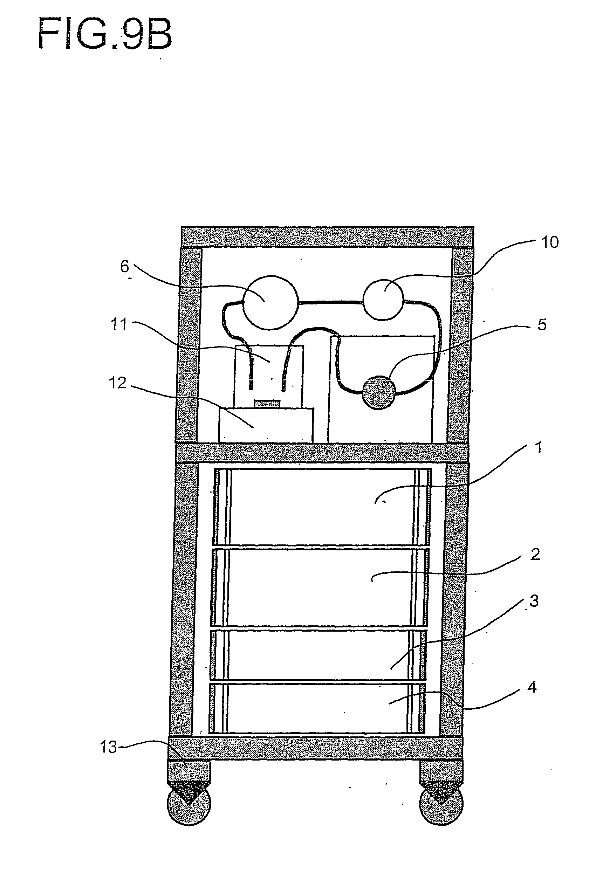

In Figur 9 ist ein bevorzugt eingesetztes System zur Remissionsmessung dargestellt. Darin zeigt Figur 9a eine Seitenansicht und Figur 9b eine Frontansicht.

In den Figuren 10 bis 12 sind die Ergebnisse von Remissionsmessungen mit dem erfindungsgemäßen Remissionssensor dargestellt.

In Figur 10 ist das Ergebnis einer Remissionsmessung einer Mischung Rot zu Weiß dargestellt. Auf der Abszisse ist die Wellenlänge in nm dargestellt und auf der Ordinate die Remission.

In Figur 11 ist das Ergebnis eines Empfindlichkeitstests dargestellt. Für diesen Test wurde ein Weißlack mit verschiedenen Farbpasten gemischt. Auf der Abszisse ist die Wellenlänge in nm dargestellt und auf der Ordinate die Remission.

In Figur 12 ist ebenfalls das Ergebnis eines Empfindlichkeitstests dargestellt. Für diesen Test wurde - wie in Figur 11 - ein Weißlack mit verschiedenen Farbpasten gemischt. Auf der Abszisse ist die Wellenlänge in nm dargestellt und auf der Ordinate die relative Remission.

### a) optische Einheit (A)

Die optische Einheit weist erfindungsgemäß eine oder mehrere Lichtquellen sowie die gesamte Faseroptik auf. Die im Folgenden aufgeführten Merkmale der optischen Einheit gelten sowohl für den erfindungsgemäßen Remissionssensor zur Messung flüssiger Pigmentpräparationen als auch für den Remissionssensor zur Messung pigmentierter fester Oberflächen.

Die Lichtquelle muss eine hinreichende Intensität und Leuchtdichte aufweisen, damit ein Spektrometer im Bereich 100 bis 600 ms Integrationszeit betrieben werden kann. Weiterhin muss das Spektrum der Lampe so beschaffen sein, dass bei Weiß alle Wellenlängen des Spektrometers bei einer Lampe ohne Korrektur mit 5 % bis 95 %, bevorzugt 10 % bis 95 % und bei einer Lampe mit Korrektur mit 25 % bis 95 % ausgesteuert sind. Dabei sind möglichst hohe Prozentzahlen (insbesondere 95 %) besonders wünschenswert. Mit Hilfe von Farb-Filtem kann das Spektrum der Lampe weiter verbessert werden. Diese Filter können nur flach verlaufende Lampenspektren "geradebiegen". Einzelne, sehr steil verlaufende Maxima, wie sie viele Gasentladungslampen in größerer Anzahl aufweisen, sind nicht korrigierbar.

Des Weiteren ist eine zeitliche und räumliche Homogenität wünschenswert. Wird eine Halogenlampe eingesetzt, wird sie bevorzugt durch Defokussierung und durch eine Streuscheibe verbessert. Der Aperturwinkel der Faser (= Lichtwellenleiter) sollte homogen "mit Licht gefüllt" sein. Die Faser sollte nicht zu stark gekrümmt sein. Alle Verbesserungs-Maßnahmen gehen zu Lasten der Intensität.

Die Lichtquelle ist eine Lampe, wobei zum Beispiel LED's, Gasentladungslampen und Lampen mit Glühwendel geeignet sind, bevorzugt ist eine Halogenlampe. Besonders bevorzugt ist eine Lampe mit integriertem Shutter. Es ist jedoch auch möglich, andere Lampen einzusetzen, die bevorzugt ein Spektrum aufweisen, so dass eine Dynamik von ca. 3 oder kleiner erreicht wird. Gleichzeitig sollte die Lampe geringe Intensitätsschwankungen und eine genügende Helligkeit aufweisen. Die bevorzugt eingesetzte Halogenlampe weist im Allgemeinen ein stabilisiertes DC-Netzteil auf.

Besonders bevorzugt sind Lampen mit Shutterbetrieb. Bei trägen Lichtquellen wie z.B. Glühwendel (Halogen) oder Gasentladung ist dies mit einem mechanischen oder z.B. optoelektronischen Shutter (Möglichkeiten dem Fachmann bekannt) gelöst, bei schnellen Lichtquellen wie z.B. Dioden oder Blitzlampen ist dies durch die elektrische Ansteuerung realisiert.

Bevorzugt ist gemäß der vorliegenden Anmeldung eine Anordnung, worin hinter der Lampe, bevorzugt Halogenlampe, ein Kompensationsfilter angeordnet ist. Dabei ist unter "hinter der Lampe" zu verstehen, dass der Kompensationsfilter dem Verlauf des Lichtstrahls der Lampe folgend nach der Lampe angeordnet ist. Der in der bevorzugten Ausführungsform eingesetzte Kompensationsfilter linearisiert das Spektrum der Lampe so, dass der Unterschied zwischen höchster und niedrigster Intensität des von der Lampe ausgestrahlten Lichts maximal 4, bevorzugt 3 bis 4 ist und nicht, was im Stand der Technik üblich ist, 10 bis 20. Dies wird mit Mehrschichtfiltern aus handelsüblichen Filtergläsern erreicht.

In einer weiteren bevorzugten Ausführungsform ist hinter der Lampe, bevorzugt Halogenlampe, - bei Einsatz eines Kompensationsfilters, was bevorzugt ist, zwischen Lampe und Kompensationsfilter - ein IR-Sperrfilter, ein Kondensor und eine Streuscheibe angeordnet. Wiederum bedeutet "hinter der Lampe" im Sinne der vorliegenden Anmeldung dem Lichtstrahl folgend nach der Lampe. Der IR-Sperrfilter dient dazu, die Wärmebelastung, die durch die Lampe auf die Probe, die Lichtwellenleiter, den Kompensationsfilter und andere Einheiten des Remissionssensors einwirkt, zu reduzieren. Der Kondensor dient dazu, das Licht der Lampe auf den Eingang der Faseroptik zu bündeln. Die Streuscheibe dient dazu, einen strukturfreien, gleichmäßigen Verlauf der Helligkeit des Lichts der Lampe über dem Ort und dem Aperturwinkel der Lichtwellenleiter zu erreichen. Geeignete Ausführungen von IR-Sperrfiltern, Kondensoren und Streuscheiben, die für den erfindungsgemäßen Remissionssensor geeignet sind, sind dem Fachmann bekannt.

Der erfindungsgemäß bevorzugt in die Lampe integrierte Shutter ist bevorzugt ein elektromechanischer Shutter, der die Beleuchtungsfaser vollständig verdunkeln kann. Die Abdunkelung durch den Shutter dient der Messung des Dunkelstroms.

Das bedeutet, der Shutter unterbricht den Lichtstrom von der Lampe zur Beleuchtungsfaser. Das ist erforderlich, um den Dunkelstrom des Spektrometers zu messen (dieser Strom fließt immer, und führt bereits bei völliger Dunkelheit zu einer Anzeige), der vom Messwert des Produktes subtrahiert werden muss. Das Spektrometer wird durch das Auslesen gelöscht, aber nur zu etwa 99 %, so dass ein Rest der letzten Messung im Spektrometer verbleibt, und die erste Dunkelmessung verfälscht. Ab der zweiten aufeinanderfolgenden Dunkelmessung ist der Wert dann unverfälscht.

Die Faseroptik des erfindungsgemäßen Remissionssensors umfasst Lichtwellenleiter (= Fasern). Diese Fasern sind eine oder mehrere Referenzfaser(n), eine oder mehrere Empfangsfaser(n) und eine oder mehrere Beleuchtungsfaser(n). Es sind grundsätzlich auch Ausführungsformen möglich, die keine Referenzfaser(n) aufweisen. Üblicherweise umfasst die Faseroptik jedoch mindestens eine Referenzfaser. Die mindestens eine Referenzfaser führt im Allgemeinen direkt von der Lichtquelle zum Detektor. Es ist jedoch auch möglich, dass mindestens eine Referenzfaser vom Messfenster zum Detektor führt.

Die Verwendung mehrerer Lichtquellen erhöht die Beleuchtungsstärke, und bei Verwendung verschiedener Lichtquellen kann ein gleichmäßigeres Beleuchtungsspektrum erzielt werden. Jede Lichtquelle erfordert jeweils mindestens eine Beleuchtungs- und bevorzug mindestens eine Referenzfaser.

Die Lichtwellenleiter sind bevorzugt Fasern mit 100, 200, 400, 600 oder 800 µm Faserdurchmesser. Besonders bevorzugt weist die als Referenzleiter eingesetzte Faser einen angepassten, bevorzugt kleineren Durchmesser auf als die übrigen Lichtwellenleiter, da die eingesetzte Lampe, bevorzugt Halogenlampe, selbst eine hohe Lichtintensität aufweist.

Um hochgenaue Messgenauigkeiten zu erzielen, sind die Lichtwellenleiter in einer bevorzugten Ausführungsform des erfindungsgemäßen Verfahrens mechanisch geschützt. Zum mechanischen Schutz werden die Lichtwellenleiter in Schutzschläuchen geführt und sind auf voller Länge mittels eines Stützgestells gestützt. Die Schutzschläuche sind im Allgemeinen aus üblichen, dem Fachmann bekannten Materialien, zum Beispiel Metall oder Polymer. Das Stützgestell ist bevorzugt ein Metallgestell, an dem die Lichtwellenleiter mittels üblichen Befestigungsmaterialien, zum Beispiel Kabelbindern oder Klebeband befestigt sind.

Der Referenzleiter wird in einer bevorzugten Ausführungsform des erfindungsgemäßen Remissionssensors über ein Dämpfungselement, d.h. ein präzises Abstandselement mit eingebauter Streuscheibe, um den vollen Aperturwinkel zu erhalten, geführt.

Die Anordnung der Lichtwellenleiter (Faseranordnung) muss so erfolgen, dass die Remission einer flüssigen Pigmentpräparation gemessen werden kann. Bei der Remission wird das Licht gemessen, welches an der medienseitigen Grenzfläche, d.h. an der Grenzfläche zum Messfenster, eines den Lichtwellenleiter abschließenden transparenten Flächenelements diffus reflektiert wird, wobei in der Regel jedoch nicht der Reflex der Grenzfläche selbst gemessen wird.

Die Reflexion an den streuenden Pigmenten bzw. Partikeln wird hier als diffus bezeichnet (im Gegensatz zur spiegelnden Reflexion an den Plattenoberflächen), dies bedeutet nicht, dass diese Reflexion nicht winkelabhängig sein kann, wie es z. B. bei ausgerichteten Plättchen der Fall sein kann ("Glanzwinkel", "Flop").

Grundsätzlich besteht die Remissionsoptik aus mindestens 2 Lichtwellenleitern (Fasern), gegebenenfalls Linsen, Blenden, Streuscheiben, und einem gemeinsamen Frontelement, das sowohl vom Licht der Beleuchtungsfaser durchdrungen wird, als auch vom Licht, das das Produkt zurückstreut (Remission), auf dem Wege zur Empfangsfaser. Dieses Frontelement ist vorteilhafterweise eine plane Scheibe aus transparentem Material, ist aber prinzipiell auch als Prisma, Linse, Stab, Zylinder oder Faser realisierbar, im Extremfall sogar als Luftpolster mit oder ohne Folie.

Grundsätzlich sind in dem erfindungsgemäßen Remissionssensor verschiedene Faseranordnungen denkbar. Bevorzugte Faseranordnungen können vom Fachmann anhand der folgenden Kriterien ermittelt werden:
A) Lichtempfindlichkeit: diese wirkt sich auf die erforderliche Integrationszeit des Sensors aus. Da die Lichtleistung der Lampe begrenzt ist, der Faserdurchmesser auch und die Empfindlichkeit des Sensors ebenfalls, sind Integrationszeiten zwischen 50 und 2000 ms typisch. Wünschenswert sind 100 bis 600 ms. Längere Integrationszeiten als 2000 ms sind ungünstig, da dann der Dunkelstromanteil ansteigt, und der Signalfehler zunimmt. Die sich ergebende längere Messzeit (erst recht, wenn die Messung zur Minimierung des Fehlers mehrfach wiederholt wird) ist ungünstig. Das Kühlen des Sensors, um den Dunkelstrom zu senken, ist sehr aufwendig.
B) Stabilität: Eine Reproduzierbarkeit von 0,05 bis 0,2 % der Remission ist besonders bevorzugt. Je nach Farbe entspricht dies einem dE von 0,02 bis 0,08. (Mit dem im Stand der Technik bekannten Remissionssensoren wird bei der Messung flüssiger Proben eine Reproduzierbarkeit von 1 bis 10 % erreicht.) Die Zeitskala ist dabei im Minutenbereich, d. h. die Abweichung zwischen zwei unmittelbar aufeinanderfolgenden Messungen (mit dem gleichen Produkt, oder im Vergleich zum Produkttyp), oder der zeitliche Abstand zwischen zwei Kalibrierungen (z. B. 24 Stunden), sowie die Langzeitstabilität durch wiederholte Kalibrierung. Kritische Faktoren sind hierbei die Alterung der optischen Teile und Fasern, mechanische Verschiebungen, Schrumpfen und
   Quellen der Werkstoffe, Kriechvorgänge und Ermüdung durch thermische Wechsellast, Wiederholbarkeit mechanischer Positionierungen beim Kalibrieren, Altern und Austausch der Lichtquelle, Abnutzung der produktberührten Fläche. Die verschiedenen Geometrien sind gegenüber diesen Faktoren nicht in gleichem Maße empfindlich.
C) Übersprechdampfung: Hiermit ist die unkontrolliert von der Lichtquelle zu der Empfangsfaser gelangende Lichtmenge gemeint, wenn ein ideal schwarzes Produkt an der Frontscheibe (Messfenster) anliegt, im Verhältnis zur Lichtmenge, die das Referenzweiß (100 %, z. B. Weißstandard, Weißpaste) remittiert. Hier sind Verhältnisse von 10 % (10⁻¹) bis hin zu 0,01 % (10⁻⁴) oder besser erzielbar. Dunkle Produkte liegen auf etwa 1 % Remission. Der Untergrund kann zwar rechnerisch subtrahiert werden, dies geht aber zu Lasten der Genauigkeit. Bevorzugt sind Übersprechdampfungen, die ab Faktor 30, bevorzugt ab Faktor 100 unter der Remission des Produktes liegen.
D) Konzentrationsabhängigkeit: Die Farbmetrik für Lacke und Pigmentpräparationen ist in gewissen Grenzen unabhängig von der Konzentration der Pigmente. Dies gilt so lange, wie die geprüfte Schichtdicke deckend ist. Bei konventionellen Farbmessgeräten liegt im üblichen Anwendungsbereich bei deckenden Produkten keine Konzentrationsabhängigkeit vor, d. h. keine Abhängigkeit der Remission von der Eindringtiefe. Manche hier beschriebenen Geometrien zeigen überraschenderweise bereichsweise eine Konzentrationsabhängigkeit.

In Figur 1 sind die Kennlinien für verschiedene Sensorköpfe (Geometrien) dargestellt. Dabei ist auf der Abszisse die Wellenlänge in nm und auf der Ordinate die relative Transmission dargestellt. Der unterste Graph (Dreiecke) zeigt die Kennlinie für die in Figur 3 dargestellte Geometrie, der mittlere Graph (Rauten) die Kennlinie für die in Figur 4 dargestellte Geometrie und der oberste Graph (Quadrate) die Kennlinie für die in Figur 2 dargestellte Geometrie.

Die Konzentrationsabhängigkeit kann mit einem geeigneten Aufbau auf etwa 1 % gesenkt werden und das restliche 1 % ist rechnerisch korrigierbar, so dass die Konzentrationsabhängigkeit die Messgenauigkeit nicht beeinträchtigt.

Die Faseranordnung (Remissionsgeometrie) wird im Allgemeinen gestaltet, indem ein Frontelement als Ausgangspunkt einer optischen Anordnung festgelegt wird. Das Frontelement ist in dem erfindungsgemäßen Remissionssensor das Messfenster (Ba). Maßgeblich sind im Allgemeinen Material, Brechungsindex, Dicke und Planität des Messfensters. Sinnvoll sind Dicken des Messfensters von im Allgemeinen 1 bis 12 mm, bevorzugt 2 bis 8 mm, besonders bevorzugt 2 bis 3 mm. Bevorzugt ist der Durchmesser 10 bis 80 mm, besonders bevorzugt 20 bis 60 mm, ganz besonders bevorzugt 30 bis 50 mm. Als Material eignen sich alle optisch transparenten Materialien z. B. Glas (Quarz), Halbedelsteine (Saphir) oder Diamant. In dieser Reihe ist günstig die zunehmende Härte, ungünstig der zunehmende Preis und der zunehmende Brechungsindex (mehr Reflexe). Für alle ist eine interne Antireflexbeschichtung vorteilhaft. Die Mittelsenkrechte des Messfensters (der Platte) bildet ein Bezugssystem (Plattenachse).

Die Beleuchtungsfaser(n) und die Empfangsfaser(n) sind gedanklich zunächst mit ihren Mittelachsen gemäß der Plattenachse ausgerichtet, sie können nun radial von dieser Achse verschoben werden, und tangential um die Achse gedreht. Außerdem können sie in radialer (und im Prinzip auch in tangentialer) Richtung geneigt werden. Bevorzugt verwendet man eine Empfangsfaser und eine oder mehrere Beleuchtungsfasern. Die Fasern haben Aperturwinkel von ca. 10 °.

Wichtig sind vor allem zwei Winkel: der Winkel zwischen Beleuchtungsfaser und Empfangsfaser, sowie der Neigungswinkel der Fasern zur Plattenachse. Für eine gute Übersprechdämpfung ist es ein wesentlicher Aspekt, die Fasern so zu neigen, dass der spiegelnde Reflex der Beleuchtungsfaser (Lichtkegel) an der Innenseite und Außenseite des Messfensters (der Platte) nicht direkt von der Empfangsfaser "gesehen" wird. (Der erste spiegelnde Reflex kann mit einer separaten Empfangsfaser als Referenz genutzt werden). Dies wird durch geeignete geometrische Konstruktionen sichergestellt. Die Figuren 2 bis 4 zeigen drei mögliche bevorzugte Geometrien. Alle gezeigten Geometrien sind zur hochgenauen Remissionsmessung geeignet. Bevorzugt sind die Geometrien in Figur 2 und 3, ganz besonders bevorzugt ist die Geometrie in Figur 2.

In Figur 2a und 2b ist eine geometrische Konstruktion von Beleuchtungs- und Empfangsfasern in dem erfindungsgemäßen Remissionssensor dargestellt, worin der Winkel zwischen Beleuchtungs- und Empfangsfaser(n) 22° beträgt und der Neigungswinkel der Empfangsfaser(n) zur Plattenachse 0°. Die Beleuchtungsfaser(n) sind zirkular um die Empfangsfaser(n) angeordnet (=Sensor 0°/22° zirkular). Zur Beleuchtung werden eine oder mehrere Faser(n) benutzt, bevorzugt 4 bis 12, besonders bevorzugt 6 bis 8. Bei Empfang oder. Beleuchtung unter 0° ist der Winkel zwischen Beleuchtungs- und Empfangsfaser im Allgemeinen 5° bis 75°, bevorzugt 15° bis 65°, besonders bevorzugt 20° bis 45°.

In Figur 2a und 2b bedeuten:

| | |
|---|---|
| 1 | Adapter zum Einbau |
| 2 | Messfenster |
| 3 | Streuscheibe (optional) |
| 4 | Beleuchtungsfaser(n) |
| 5 | Faserstecker für Beleuchtungsfaser |
| 6 | Linsenhalterung mit Linse |
| 7 | Faserträger mit Empfangsfaser(n) |
| 8 | Grundkörper |
| 9 | Lichtfalle (optional) |

Figur 2a zeigt eine Seitenansicht der Fasergeometrie des Remissionssensors und Figur 2b zeigt eine Aufsicht, wobei die zirkulare Anordnung der Beleuchtungsfaser(n) erkennbar ist.

In Figur 3a und 3b ist eine geometrische Konstruktion von Beleuchtungs- und Empfangsfaser(n) in dem erfindungsgemäßen Remissionssensor dargestellt, worin der Winkel zwischen Beleuchtungs- und Empfangsfaser(n) 0° beträgt und der Neigungswinkel der Empfangsfaser(n) zur Plattenachse 27°. Die Beleuchtungs- und Empfangsfaser(n) sind zirkular um die Plattenachse angeordnet (Sensor 27°/0° zirkular).

Zur Beleuchtung werden eine oder mehrere Fasern benutzt, bevorzugt 4 bis 12, besonders bevorzugt 6.

Bei parallelem Empfang und Beleuchtung ist der Neigungswinkel zwischen dem Fasersystem und der Senkrechten im Allgemeinen 5° bis 75°, bevorzugt 15° .bis 65°, besonders bevorzugt 20° bis 45°.

In Figur 3a und 3b bedeuten:

| | |
|---|---|
| 1 | Grundkörper |
| 2 | Messfenster |
| 3 | 1. Reflex |
| 4 | 2. Reflex |
| 5 | Strahlengang im Produkt |
| 6 | Fasern |
| 6a | Beleuchtung |
| 6b | Empfang |
| 7 | Faserstecker |
| 8 | Lichtfalle (optional) |

Figur 3a zeigt eine Seitenansicht der Fasergeometrie des Remissionssensors und Figur 3b zeigt eine Aufsicht, wobei die zirkulare Anordnung von Beleuchtungs- und Empfangsfaser(n) erkennbar ist.

In Figur 4a und 4b ist eine geometrische Konstruktion von Beleuchtungs- und Empfangsfasern in dem erfindungsgemäßen Remissionssensor dargestellt, worin der Winkel zwischen Beleuchtungs- und Empfangsfaser(n) 56° beträgt und der Neigungswinkel der Beleuchtungsfaser(n) zur Plattenachse 25° (= Sensor 25°/56°).

Bei Geometrien mit zwei freien Winkeln können die Winkel in den Bereichen von im Allgemeinen 5° bis 75°, bevorzugt 15° bis 65°, besonders bevorzugt 20° bis 45° variieren dies sowohl für den Neigungswinkel zur Senkrechten als auch für den Winkel zueinander (beide Winkel müssen nicht gleich sein).

Ferner können die Beleuchtungsfasern auch noch zirkular um eine oder mehrere geneigte(n) Empfangsfaser(n) angeordnet sein, wobei hier bevorzugt ein kleinerer Winkel zur Empfangsfaser verwendet werden soll (ähnlich Geometrie Figur 2a und 2b).

In Figur 4a und 4b bedeuten:

| | |
|---|---|
| 1 | Grundkörper |
| 2 | Messfenster |
| 3 | 1. Reflex |
| 4 | Strahlengang im Produkt |
| 5 | Beleuchtungsfaser(n) |
| 6 | Empfangsfaser(n) |
| 7 | Faserstecker |
| 8 | Lichtfalle (optional) |

Figur 4a zeigt eine Seitenansicht der Fasergeometrie des Remissionssensors und Figur 4b zeigt eine Aufsicht, wobei der Winkel zwischen Beleuchtungs- und Empfangsfaser(n) erkennbar ist.

Die Streuscheibe dient zum homogenisieren der Lichtverteilung auf dem Objekt und ist nicht immer notwendig, aber bei verschiedenen Geometrien vorgeschrieben (d/5° = Diffus beleuchtet unter 5° Empfang).

Der Grundkörper (Träger) ist ein Werkstück in dem oder an dem die ganzen Kleinteile befestigt sind.

Die Lichtfalle dient immer der Vermeidung oder Unterdrückung von Lichtreflexen oder Streulicht und ist meistens bevorzugt.

Für eine gute Kalibrierbarkeit sind große Winkel jedoch nachteilig. Das bedeutet, die optimalen Winkel sind so groß zu wählen, dass eine gute Kalibrierbarkeit gewährleistet bleibt.

Zwischen Faser und Messfenster (Platte) können noch Linsen, Blenden und Streuscheiben angeordnet werden, womit man Übersprechen, Lichtstärke und Homogenität optimieren kann.

Es wurde gefunden, dass die Konzentrationsabhängigkeit bei geringen Eindringtiefen gering ist, wenn aus verschiedenen Richtungen, d. h. konzentrisch beleuchtet wird, und insbesondere der Beleuchtungsfleck größer als der Beobachtungsfleck kompatibel mit einer erfindungsgemäßen kurzen Scherspaltlänge gemacht wird. Bevorzugt ist der Beleuchtungsfleck daher größer als der Beobachtungsfleck. Besonders bevorzugt ist der Durchmesser des Beleuchtungsflecks 4 bis 20 mm, besonders bevorzugt 8 bis 14 mm und der Durchmesser des Beobachtungsflecks 1 bis 10 mm, besonders bevorzugt 2 bis 5 mm. Somit eignet sich der erfindungsgemäße Remissionssensor insbesondere für exakte Remissionsmessungen an flüssigen Pigmentpräparationen.

Unter Beachtung dieser Zusammenhänge kann das Optimum für eine Anwendung in einfacher Weise durch den Fachmann experimentell ermittelt werden.

Zum Anschluss der Lichtwellenleiter (= Fasern) an die Lichtquelle und den Detektor werden im Allgemeinen handelsübliche SMA-Stecker verwendet.

In einer besonders bevorzugten Ausführungsform weist der erfindungsgemäße Remissionssensor zusätzlich mindestens eines der folgenden Merkmale auf:
ac) hinter der Lampe ist ein Kompensationsfilter angeordnet, der das Spektrum der Lampe so linearisiert, dass der Unterschied zwischen höchster und niedrigster Intensität des von der Lampe ausgestrahlten Lichts möglichst klein, zum Beispiel maximal Faktor 4 ist,
ad) hinter der Lampe - bei Einsatz eines Kompensationsfilters zwischen Lampe und Kompensationsfilter - ist ein IR-Sperrfilter, ein Kondensator und eine Streuscheibe angeordnet,
ae) die Lichtwellenleiter werden in Schutzschläuchen geführt und auf voller Länge mittels eines Stützgestells gestützt,
af) der Referenzleiter wird über ein präzises Abstandselement mit eingebauter Streuscheibe geführt, und definiert abgeschwächt.

Die einzelnen Merkmale gemäß ac), ad), ae) und af) wurden vorstehend bereits präzisiert. Besonders bevorzugt weist der erfindungsgemäße Remissionssensor zusätzlich mindestens die Merkmale ac) und ad) auf, ganz besonders bevorzugt mindestens die Merkmale ac), ad) und ae) und insbesondere die Merkmale ac), ad), ae) und af).

Bevorzugt wird die optische Einheit in einer Präzisionsbohrung geführt und mit einem definierten Abstandshalter gegen das Messfenster angedrückt.

### b) Probenanalyseeinheit

Die Probenanalyseeinheit umfasst ein Messfenster und eine Probenanalysezelle.

Das Messfenster ist im Allgemeinen eine Planplatte. Für die Planplatte geeignete Materialien sind alle optisch transparenten Materialien, zum Beispiel Glas (Quarz), Halbedelsteine (Saphir) sowie Diamant. Die Planplatte weist im Allgemeinen eine Dicke von 1 bis 20 mm, bevorzugt 2 bis 10 mm, besonders bevorzugt 4 bis 8 mm und einem Durchmesser von im Allgemeinen 10 bis 80 mm, bevorzugt 20 bis 60 mm, besonders bevorzugt 30 bis 50 mm. Die Planplatte wird in einen Block, bevorzugt einen Metallblock, zum Beispiel aus Titan oder Edelstahl, druck- und lösungsmittelfest eingefügt. Dazu wird die Planplatte zum Beispiel eingeklebt oder mit einer anderen Fügetechnik in den Block eingesetzt. In einer Ausführungsform der vorliegenden Erfindung wird eine Planplatte aus Saphir mit Gold bedampft zur druck- und lösungsmittelfesten Einfügung. Das Messfenster selbst steht bevorzugt um einige µm, im Allgemeinen 0 bis 100 µm, bevorzugt 0 bis 50 µm, besonders bevorzugt 10 bis 20 µm vor. Das Messfenster steht im Allgemeinen senkrecht, so dass eine einfache Befüllung der Probenanalyseeinheit mit der flüssigen Pigmentpräparation und ein einfacher Ablauf von Lösungsmittel möglich ist. Das Messfenster ist bevorzugt rund. Bevorzugt bildet der Metallblock (insbesondere in Ausführungsform (I)) eine Tropfkante aus, um gezielt Tropfen aus den als Probe eingesetzten flüssigen Pigmentpräparationen an dieser Stelle zu bilden, damit diese nicht an empfindliche Stellen des Remissionssensors gelangen.

Auf der anderen Seite des Messfensters (d.h. auf der anderen Seite des Messfensters als die optische Einheit) ist bei dem erfindungsgemäßen Remissionssensor die Probenanalysezelle angeordnet, indem diese so an das Messfenster angepresst wird, dass ein Spalt zwischen Messfenster und Probenanalysezelle gebildet wird, den eine zu messende flüssige Pigmentpräparation durchqueren muss, wobei bei der Durchquerung des Spalts eine Scherung der Probe erfolgt. Die Scherung wird dadurch erzielt, dass der Druckverlust in dem Spalt bevorzugt 0,1 bis 3 bar auf 1 bis 15 mm Länge, besonders bevorzugt 0,5 bis 1 bar auf 1 bis 5 mm Länge beträgt. Dadurch, dass die Probenanalysezelle auf einer Seite des Messfensters angepresst (und abnehmbar) ist, lässt sich die optische Einheit sowie gegebenenfalls das Messfenster leicht reinigen und kalibrieren.

Die Probenanalysezelle ist bevorzugt ein Block, in dem sich zwei Bohrungen in einem Winkel von im Allgemeinen +/- 20 ° bis +/- 70 °, bevorzugt etwa +/- 45°, zur Senkrechten in der Frontseite des Blocks treffen (unter "Senkrechte" ist dabei die Mittelsenkrechte der Planplatte (Messfenster) zu verstehen). Genau in der Symmetrieebene der beiden Bohrungen befindet sich ein aus einem Zylinder herausgearbeiteter, bevorzugt vorne keilförmig angeschrägter, Verdränger, so dass sich der Spalt zwischen Messfenster und Probenanalysezelle ausbildet. Das bedeutet, dass die Probe zwischen dem Messfenster und dem Verdränger einen Spalt durchqueren muss, der im Allgemeinen 2 bis 15 mm, bevorzugt 3 bis 5 mm, besonders bevorzugt ca. 3 mm lang ist, 2 bis 40 mm, bevorzugt 6 bis 25 mm, besonders bevorzugt 8 bis 16 mm breit ist und im Allgemeinen zwischen 0,05 und 5 mm, bevorzugt zwischen 0,2 und 2,5 mm, besonders bevorzugt zwischen 0,5 und 1,5 mm hoch ist. Dabei ist die Höhe des Spalts in einer bevorzugten Ausführungsform des Remissionssensors variabel einstellbar. In einer bevorzugten Ausführungsform der vorliegenden Anmeldung wird die Probenanalysezelle auf Führungsstangen, bevorzugt 4, geführt und bevorzugt mit Schnellspannmuttern, besonders bevorzugt 4, angeschraubt.

Die Abdichtung der Probenanalysenzelle gegen die optische Einheit kann nach allen dem Fachmann bekannten Methoden erfolgen. Der Verdränger kann in der Ausführungsform des Remissionssensors, in der die Höhe des Spalts variabel einstellbar ist, bevorzugt durch einen Hebel, nach vom, d.h. in die Richtung des Messfensters, geschoben und arretiert werden. Dabei wird durch, bevorzugt beschriftete, Abstandselemente (Platten) ein definierter Spalt eingestellt. Ein Vorteil an dieser bevorzugten Ausführungsform ist, dass dieser Spalt auch im produktgefüllten Zustand verändert werden kann. In einer alternativen Ausführungsform kann der Verdränger anstatt durch einen Hebel mit einer elektromechanischen Linearantriebseinheit verstellt werden. Die erhebliche Scherung des Produkts in dem Messspalt ist ein ausschlaggebender Faktor, sowohl um einen definierten Probenzustand zu erhalten, d.h. durch diese Scherung werden Agglomerate von zum Beispiel Pigmentpartikeln aufgelöst, und um eine Selbstreinigung des Messfensters zu erzielen, das durch die starke Scherung der Probe ständig von gegebenenfalls am Messfenster hängengebliebenen Pigmentpartikeln befreit wird. Eine solche Scherung des Produktes und damit verbundene Herstellung eines definierten Produktzustandes sowie eine Selbstreinigung des Messfensters ist im Stand der Technik nicht erwähnt.

Die Scherung wird in einer bevorzugten Ausführungsform dadurch erreicht, dass in dem Messspalt ein Druckabfall von der Eintrittsstelle der Probe in den Spalt bis zu ihrer Austrittsstelle von 0,1 bis 3 bar auf 1 bis 15 mm Länge, bevorzugt 0,5 bis 1 bar auf 1 bis 5 mm Länge hergestellt wird. Ein besonderer Vorteil dieser Selbstreinigung des Messfensters ist, dass diese auch während der Messung aktiv ist, so dass ein häufiges An- und Ausschalten des Remissionssensors zu Reinigungszwecken erübrigt ist, was insbesondere beim Einsatz des Remissionssensors zur Prüfung von zum Beispiel in kontinuierlicher Herstellung hergestellten Pigmentpasten vorteilhaft ist. Nur, wenn die Selbstreinigung bei speziellen Produkten nicht ausreicht, kann zusätzlich ein Wischer über die Fläche des Messfensters geführt werden, zum Beispiel indem ein Teflonstreifen in den Spalt geschoben wird. Dies erfordert dann, dass der Spaltabstand passend eingestellt wird, was gemäß einer bevorzugten Ausführungsform des erfindungsgemäßen Verfahrens möglich ist. Besonders bevorzugt erfolgt die Spaltverstellung in dieser Variante elektromechanisch.

Um einen definierten Probenzustand aufrecht zu erhalten und damit vergleichbare Messdaten zu erzielen, ist eine konstante Scherung der Probe erforderlich. Diese wird bevorzugt durch kontinuierliche Überwachung des Eingangsdrucks, d.h. des Drucks an der Eingangsstelle der flüssigen Pigmentpräparation in den Spalt realisiert.

Die Drucküberwachung ist erforderlich, um ein definierte Scherung am Messort zu erzielen. Wenn dies mit anderen Maßnahmen sichergestellt ist (z. B. bekannte Pumpleistung, Viskosität und Spaltweite), kann eine Druckmessung entfallen. Bei einer Druckmessung bieten sich mehrere Varianten an, nämlich die T-Konfiguration, die V-Konfiguration, eine Messung mit durchflossenem Druckaufnehmer, sowie eine Bohrung in der Produktzelle. Der Aufbau der genannten Konfigurationen ist dem Fachmann bekannt. Auswahlkriterium ist die hinreichend genaue Messung der relativ kleinen Drucke, die Unempfindlichkeit gegen Druckschwankungen (z. B. wenn das Produkt mit einer pulsierenden Pumpe gefördert wird), sowie die leichte Spülbarkeit (keine Toträume) oder zumindest Reinigbarkeit.

In einer besonders bevorzugten Ausführungsform des erfindungsgemäßen Remissionssensors ist der Druckmesser in eine Messkammer mit sehr geringem Volumen eingebaut und wird mit einer sehr ,dünnen Teflonfolie vor dem Eindringen von als Probe eingesetzten flüssigen Pigmentpräparationen geschützt. Die Zuleitung ist in einer bevorzugten Ausführungsform aufwärts gerichtet, so dass auch bei Druckanstieg bis 2 bar noch kein Produkt in die Messkammer gelangen kann. Dadurch muss lediglich der Schlauch erneuert werden, wenn ein Probenwechsel erfolgt. Die Einstellung des Eingangsdrucks ist u.a. abhängig von der Deckkraft sowie von der Viskosität der als Probe eingesetzten flüssigen Pigmentpräparation. Wird als Probe beispielsweise ein nicht stark deckender Lack eingesetzt, ist es erforderlich, einen größeren Messspalt zu wählen, als wenn ein stärker deckender Lack eingesetzt wird. Der Druckverlust muss dann neu eingestellt werden.

In Figur 5 ist eine bevorzugte Ausführungsform einer Produktzelle zur Remissionsmessung an flüssigen Pigmentpräparationen (Nassmessung), umfassend die Probenanalysezelle, das Messfenster sowie eine Halterung (Stütze) für die Faseroptik der optischen Einheit dargestellt.

Darin bedeuten:

| | |
|---|---|
| 1 | Grundplatte (Montageplatte) |
| 2 | Halterung für das Messfenster |
| 3 | Messfenster |
| 4 | Halterung (Führungselement) für das System |
| 5 | Tropfkante |
| 6 | Grundkörper der Produktzelle |
| 7 | Produkt Auslauf |
| 8 | Produkt Zulauf |
| 9 | Scherspalt |
| 10 | Vorrichtung zum Verändern des Scherspalts |
| 11 | variables Dichtsystem |

Die Probenanalysezelle kann bei dem erfindungsgemäßen Remissionssensor abgenommen werden und durch feste Proben, z. B. Bleche, Folien, Kunststoffoberflächen oder durch einen Kalibrierstandard ausgetauscht werden. Wird die Probenanalysezelle entfernt, kann eine Halterung für Proben, die eine feste Oberfläche aufweisen, vorhanden sein. Somit ist es mit dem erfindungsgemäßen Remissionssensor möglich, sowohl Nass- als auch Trockenmessungen durchzuführen. Dadurch ist z. B. ein Vergleich einer festen und einer flüssigen Probe eines Produktes, z. B. eines Lacks, möglich. Der erfindungsgemäße Remissionssensor ermöglicht somit einen einfachen Vergleich von Nass- und Trockenmessungen.

Ein weiteres Merkmal des erfindungsgemäßen Remissionssensors ist somit, dass die Probenanalysezelle abnehmbar ist. Dabei ist das Abnehmen der Probenanalysezelle problemlos möglich und der nach Abnehmen der Probenanalysezelle vorhandene Teil des Remissionssensors ist zur Messung fester Proben (Trockenmessung) geeignet, ohne dass Umbauten an dem nach Abnehmen der Probenanalysezelle vorhandenen Teil des Remissionssensors erforderlich sind.

Der nach Abnehmen der Probenanalysezelle zur Messung fester Proben geeignete Remissionssensor ist aufgebaut aus
a) einer optischen Einheit, die
   aa) eine Lichtquelle in Form einer Lampe mit integriertem Shutter, und
      ab) eine Faseroptik umfassend Lichtwellenleiter, wobei mindestens ein Lichtwellenleiter ein Referenzleiter ist,
         umfasst,
   b) einer Probenanalyseeinheit, die
      b'a) ein Messfenster, und
      b'b) eine Halterung für Proben, die eine feste Oberfläche aufweisen,
      umfasst,
      und c) einer System-Kontrolleinheit, umfassend Detektoren zur Aufnahme von Messdaten und ein daran angeschlossenes Auswertegerät,
      wobei eine Lichtwellenleiterverbindung von der Lichtquelle zu dem Messfenster und von dem Messfenster weiter zu den Detektoren geführt wird, zur Erzeugung eines Messsignals, und eine Referenzleiterverbindung direkt von der Lichtquelle zum Detektor oder vom Messfenster zum Detektor geführt wird, zur Erzeugung eines Referenzsignals.

Die optische Einheit, das Messfenster und die System-Kontrolleinheit entsprechen der optischen Einheit, dem Messfenster und der System-KontrollEinheit, die bezüglich des erfindungsgemäßen Remissionssensors zur Messung flüssiger Pigmentpräparationen beschrieben wurden bzw. in Bezug auf die System-Kontrolleinheit nachfolgend beschrieben werden.

Als Halterung für Proben, die eine feste Oberfläche aufweisen (= feste Proben), das heißt zum Beispiel für Bleche, Folien, Kunststoffe oder einen Kalibrierstandard, ist jede dem Fachmann bekannte Halterung geeignet. Bevorzugt wird die feste Probe von Führungsstangen gehalten, durch ein Anpresselement an das Messfenster gedrückt und mittels eines Federelements gefedert.

Der Remissionssensor zur Messung fester Proben kann zur Messung der pigmentierten Oberflächen von zum Beispiel Blechen, Folien oder Kunststoffen eingesetzt werden oder zur Messung eines Kalibrierstandards.

In Figur 6 ist eine bevorzugte Ausführungsform einer so genannten Blechzelle zur Remissionsmessung an festen pigmentierten Oberflächen (Trockenmessung), umfassend die Halterung für Proben, die eine feste Oberfläche aufweisen, das Messfenster sowie eine Halterung (Führungselement) für die Faseroptik der optischen Einheit dargestellt.

### Darin bedeuten

| | |
|---|---|
| 1 | Grundplatte (Montageplatte) |
| 2 | Halterung für das Messfenster |
| 3 | Messfenster |
| 4 | Halterung (Führungselement) für das Fasersystem |
| 5 | Tropfkante |
| 6 | Abstandshalter |
| 7 | feste Probe |
| 8 | Federelement |
| 9 | Anpresselement |
| 10 | Führungsstangen |

In Figur 7 ist eine bevorzugte Ausführungsform einer so genannten Referenzzelle zur Remissionsmessung des Referenzstandards (bevorzugt eine weiße Glasscheibe) (Trockenmessung), umfassend die Halterung für den Referenzstandard, das Messfenster sowie eine Halterung (Führungselement) für die Faseroptik der optischen Einheit dargestellt.

### Darin bedeuten

| | |
|---|---|
| 1 | Grundplatte (Montageplatte) |
| 2 | Halterung für das Messfenster |
| 3 | Messfenster |
| 4 | Halterung (Führungselement) für die Fasern |
| 5 | Tropfkante |
| 6 | Grundkörper Referenzzelle |
| 7 | Abstandshalter |
| 8 | Referenzstandard |
| 9 | variables Anpresssystem |

Die Grundplatte (Träger) ist ein Werkstück in dem oder an dem die ganzen Teile befestigt und positioniert sind.

Der Abstandshalter dient zur genauen und reproduzierbaren Abstandseinstellung Objekt zu Messfenster, dies ist sehr wichtig, da die Remissionsmessung abstandsabhängig ist. Kontakt muss wegen Interferenzen vermieden werden.

Somit umfasst die vorliegende Anmeldung verschiedene Ausführungsformen von Remissionssensoren:
- Remissionssensor zur Messung flüssiger Pigmentpräparationen (Nassmessung),
- Remissionssensor zur Messung fester pigmentierter Oberflächen (Trockenmessung),
- Remissionssensor zur Kalibrierung ("Trockenmessung"). In den Figuren 5 bis 7 sind die Messzellen der Ausführungsformen dargestellt.

### c) System-Kontrolleinheit

Die System-Kontrolleinheit umfasst Detektoren zur Aufnahme von Messdaten und ein daran angeschlossenes Auswertegerät. Bevorzugt sind die Detektoren faseroptische monolithische Diodenzeilenspektrometer, die eine Auflösung von wenigstens 15 bit ermöglichen.

Alle dem Fachmann bekannten Detektoren können eingesetzt werden, bevorzugt sind es faseroptisch gekoppelte monolithische Diodenzeilenspektrometer, da diese sehr robust und signalstabil sind. Sie sollten eine möglichst hohe Auflösung haben mindestens 10 bit, bevorzugt ab 12 bit, besonders bevorzugt ab 15 bit.

In einer besonders bevorzugten Ausführungsform des Remissionssensors sind alle Einheiten des Remissionssensors, d.h. die optische Einheit, die Probenanalyseeinheit und die System-Kontrolleinheit in einem gemeinsamen Gehäuse untergebracht, in dem bevorzugt eine Ventilation und eine thermostatgeregelte Wärmeabfuhr, besonders bevorzugt über Kühlwasser, erfolgt (Kühler/Lüfter). Bevorzugt handelt es sich um ein mobiles Gehäuse, das ohne Schwierigkeiten zum Einsatzort transportiert werden kann, zum Beispiel ein Gehäuse auf Rollen. Das Gehäuse wird temperiert, da eine konstante Temperatur zu einer Verbesserung der Messgenauigkeit führt. Gleichzeitig werden thermische Wechselbelastungen vermieden, die zu mechanischen Veränderungen führen können. Des Weiteren wird durch das Gehäuse eine Berührung der Lichtwellenleiter sowie der anderen Elemente des Remissionssensors vermieden und Lichtdichtheit gewährleistet. Durch das gemeinsame Gehäuse wird somit eine Erhöhung der Messgenauigkeit des Remissionssensors erzielt.

Eine bevorzugte Ausführungsform der Kontrolleinheit gleicht die Helligkeiten der verschiedenen optischen Signale (Referenz, Messung) durch Einsatz mindestens eines optischen Dämpfers an, um die Spektrometer gleich und somit maximal aussteuern zu können. Dies optimiert die Messgenauigkeit. Dieser Dämpfer muss die eingestellte Dämpfung konstant halten, und ist bevorzugt kontinuierlich verstellbar, und besonders bevorzugt mit einem elektromechanischen oder piezoelektrischen Präzisionsantrieb. Der Dämpfer besitzt einen Eingang für die Faseroptik und einen Ausgang zum Spektrometer. Er ist aus Blenden, Abstandshaltern, Streuscheiben, Konversionsfiltern und Neutralfiltern konfigurierbar, dabei ist auf Stabilität und die Erhaltung einer vollständigen Aperturausleuchtung zu achten.

In Figur 8a und 8b ist eine besonders bevorzugte Ausführungsform eines Dämpfers dargestellt.

Darin bedeuten:

| | |
|---|---|
| 1 | SMA-Buchse Empfang |
| 2 | Grundkörper |
| 3 | Streuscheibe (optional) |
| 4 | Neutralfilter (optional) |
| 5 | Konversionsfilter (optional) |
| 6 | SMA-Buchse Sender |
| 7 | Klemmvorrichtung |
| 8 | Kolben |
| 9 | Führungsstangen (optional) |
| 10 | Schlitten (optional) |
| 11 | Antriebsstange (optional) |
| 12 | Motorhalterung (optional) |
| 13 | Motor (optional) |

In Figur 8a ist die Vorderansicht des Dämpfers dargestellt und in Figur 8b die Aufsicht.

In Figur 9 ist ein bevorzugt eingesetztes System zur Remissionsmessung dargestellt.

Darin zeigt Figur 9a eine Seitenansicht und Figur 9b eine Frontansicht.

Darin bedeuten

| | | |
|---|---|---|
| 1 | | Lichtquelle |
| 2 | | Spektrometer mit optischem Dämpfer (Anzahl 1 bis maximal 8) und Verstärker |
| 3 | | Kühler |
| 4 | | PC mit AD-(analog/digital) Wandler |
| 5 | | Pumpe |
| 6 | | Produktzelle |
| 7 | | Messfenster |
| 8 | | Faserhalterung |
| 9 | | Fasern (bevorzugt Glasfasern) |
| 10 | | Druckmessung |
| 11 | | Vorlagebehälter |
| 12 | | Rührer (zum Beispiel Magnetrührer) |
| 13 | | mobiles Gehäuse |

| | | |
|---|---|---|
| Spektrometer 1 - maximal 8 bedeutet, dass jeder zu messende Lichtweg einen eigenen spektralen Detektor (Spektrometer) besitzt. - Weg 1 normalerweise Remission - Weg 2 normalerweise Referenz direkt von der Lampe - Weg 3 normalerweise Referenz von der Scheibe - Weg 4 optional 2. Remissionsrichtung - Weg 5 .... | | |

Die höchste Messgenauigkeit des Remissionssensors wird erreicht, wenn alle genannten Merkmale in dem Remissionssensor erfüllt sind. So können mit Hilfe des erfindungsgemäßen Remissionssensors zur Messung flüssiger Pigmentpräparationen sehr hohe absolute Messgenauigkeiten von im Allgemeinen < 0,5 bis zu 0,05 dE, erzielt werden, was durch eine absolute Messgenauigkeit von 0,1% der Rohmessdaten (Remissionsintensitäten) erreicht wird. Im Vergleich dazu werden bei Messungen fester pigmentierter Oberflächen (Trockenmessungen) gemäß dem Stand der Technik absolute Messgenauigkeiten von 0,1 dE erzielt. Der erfindungsgemäße Remissionssensor ist somit geeignet, aufwändige Trockenmessungen zu ersetzen. Dies wird durch die Sensorcharakteristik des erfindungsgemäßen Remissionssensors erreicht. Demgegenüber erreichen übliche Remissionssensoren gemäß dem Stand der Technik lediglich Absolutgenauigkeiten von ca. 1 bis 10 %. Die Ursachen dafür sind unter anderem Schwankungen der Lampenhelligkeit, Schwankungen der Übertragungseigenschaften der Fasern, Schwankungen des Dunkelstroms, fehlende Produkterneuerung am Messort, undefinierter Produktzustand am Messort, Anwachsen von Verbackungen am Messfenster, das schleichende Verdrängen von andersfarbigen Resten aus Toträumen in der Produktzufuhr sowie Schwankungen des optischen Detektors. Diese Ursachen werden mit dem erfindungsgemäßen Remissionssensor, insbesondere mit den bevorzugten Ausführungsformen des erfindungsgemäßen Remissionssensors ausgeräumt.

Vor Beginn der Messungen muss der Remissionssensor kalibriert werden. Dies kann grundsätzlich auf jede beliebige, dem Fachmann bekannte Art und Weise erfolgen. Bevorzugt wird zur Kalibrierung des Remissionssensors eine weiße Glasscheibe verwendet, da diese wesentlich weniger verschmutzungsanfällig ist als eine üblicherweise eingesetzte matte Oberfläche. Das Glas hat gegenüber der matten Oberfläche den Vorteil, dass es nicht altert und sich immer wieder definiert reinigen lässt. Die Spiegelung des Glases ist unkritisch, da der Remissionssensor im Allgemeinen ohnehin so aufgebaut ist, dass spiegelnde Reflexe ausgeblendet werden. Zur Kalibrierung wird die Probenanalysezelle des Remissionssensors abgenommen.

In einer bevorzugten Ausführungsform wird die weiße Glasscheibe (Kalibrierscheibe) in einen Präzisionshalter an den üblicherweise in einer bevorzugten Ausführungsform die Probenanalyseeinheit tragenden Führungsstangen gegen das Messfenster geführt und mit Passstiften positioniert. Für einen definierten und reproduzierbaren Abstand der weißen Glasscheibe zum Messfenster sorgt ein Abstandshalter. Vorteilhaft wird dieser auf Werte von 50 bis 500 µm, besonders bevorzugt etwa 100 µm eingestellt. Die Glasscheibe und der Abstandshalter sind elastisch gelagert, bevorzugt über ein variables Anpresssystem zum Beispiel mittels Federkraft oder einem Elastomer, so dass sie immer plan mit definierter Anpresshraft auf dem Messfenster aufliegen. Die Reproduzierbarkeit dieser Kalibrierung liegt bei etwa 0,1%.

Ein weiterer Vorteil des erfindungsgemäßen Remissionssensors ist, dass mit dieser Vorrichtung auch Messungen, insbesondere Vergleichsmessungen, mit pigmentierten Oberflächen fester Proben, z. B. Blechen und Folien, anstelle der flüssigen Pigmentpräparationen durchgeführt werden können, wenn die Probenanalysezelle durch diese festen Proben, z. B. Bleche und Folien, ausgetauscht wird. Dazu können Führungsstangen, insbesondere die oberen Führungsstangen entfernt werden. Auf den Messkopf (d.h. Messfenster mit Halterung) wird im Allgemeinen ein Abstandshalter gestülpt. Auf die unteren Stangen wird ein Blech gestellt, das durch ein von diesen Stangen geführtes Anpresselement gegen das Messfenster gedrückt wird. Die Anpressung erfolgt mit einer elastisch aufgehängten Planplatte in der Größe des Messfensters.

Die Möglichkeit, mit der gleichen Optik auch feste Proben, z. B. Bleche, in definiertem Abstand und in definierter Ausrichtung zu messen, ist eine Besonderheit der planen Ausführung des Messfensters und der abnehmbaren Produktzelle. Diese Möglichkeit erlaubt eine einfache Übertragung von Nassmessungen auf Trockenmessungen.

Ein weiterer Gegenstand der vorliegenden Anmeldung ist ein Verfahren zur Messung der Remission einer Probe in Form einer flüssigen Pigmentpräparation, umfassend:
i) Ausbildung eines Probenstroms mit einer definierten Dicke,
ii) Bestrahlung des Probenstroms mit von einer Lichtquelle ausgesandter elektromagnetischer Strahlung, wobei die elektromagnetische Strahlung mit der Probe in Wechselwirkung tritt und ein Teil der Strahlung nach Wechselwirkung mit der Probe diffus reflektiert wird,
iii) Empfangen und Erfassen der diffus reflektierten Strahlung als Remissionssignal,
iv) Empfangen und Erfassen eines Referenzsignals, wobei das Referenzsignal von derselben Lichtquelle, die zur Bestrahlung des Probenstroms dient, ausgesandte elektromagnetische Strahlung ist, die nicht mit der Probe in Wechselwirkung tritt,
wobei das Remissionssignal und das Referenzsignal simultan erfasst werden.

Damit wird erreicht, dass beide Signale, d.h. das Remissionssignal und das Referenzsignal von den gleichen zufälligen Schwankungen betroffen werden. Dies wird durch Verwendung von faseroptischen monolithischen Diodenzeilen-Spektrometem erreicht, die bevorzugt eine Auflösung von wenigstens 15 bit ermöglichen und die mit Integrationszeiten zwischen 4 ms und 6000 ms an die vorhandene Helligkeit angepasst werden. Die mit solchen Diodenzeilen-Spektrometem gemessenen Werte beziehen sich auf eine Diodennummer und müssen auf feste Wellenlängen interpoliert werden. Diese Interpolation ist besonders genau, wenn ein Spline verwendet wird, was bevorzugt ist. Dazu müssen jedoch vorher die Empfindlichkeitsunterschiede der einzelnen Dioden ausgeglichen werden, da es sonst zu Überschwingungen kommt. Dieser Ausgleich erfolgt durch das Teilen der Signale durch ein für den Sensorbaustein charakteristisches Muster (pattern) vor der Interpolation.

In einer bevorzugten Ausführungsform wird das erfindungsgemäße Verfahren mit dem erfindungsgemäßen Remissionssensor durchgeführt. Bevorzugte Ausführungsformen des erfindungsgemäßen Remissionssensors sind bereits vorstehend genannt.

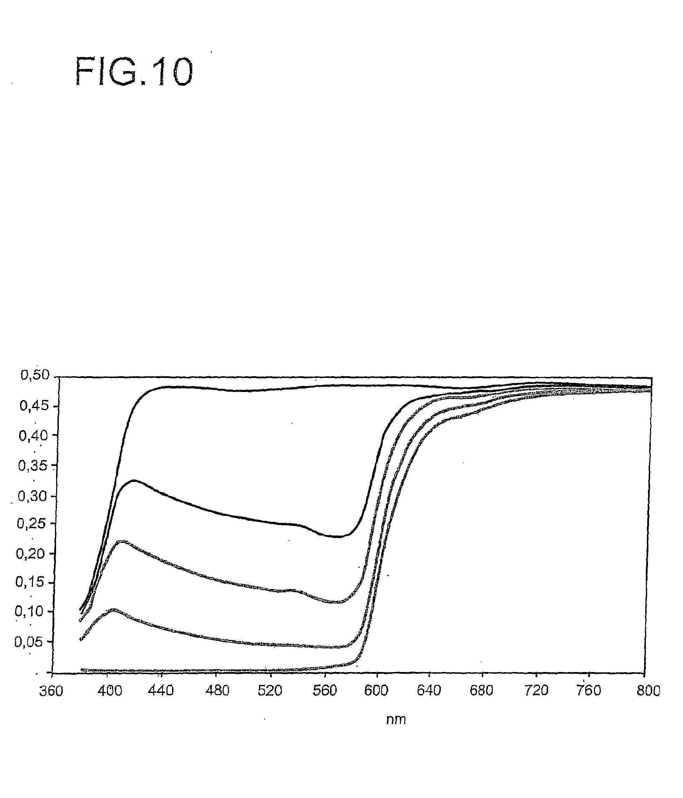

Ein weiterer Gegenstand der vorliegenden Anmeldung ist daher die Verwendung des erfindungsgemäßen Remissionssensors zur Messung der Remission einer Probe in Form einer flüssigen Pigmentpräparation. In den Figuren 10 bis 12 sind die Ergebnisse von Remissionsmessungen mit dem erfindungsgemäßen Remissionssensor dargestellt.

In Figur 10 ist das Ergebnis einer Remissionsmessung einer Mischung Rot zu Weiß dargestellt.

Auf der Abszisse ist die Wellenlänge in nm dargestellt und auf der Ordinate die Remission.

Die verschiedenen Graphen stellen die Messergebnisse bei verschiedenen Rot/Weiß-Verhältnissen dar.
- Der unterste und hellste Graph betrifft ein Präparation aus 100% Rot.
- Der darüberliegende Graph betrifft eine Mischung aus 70% Rot und 30% Weiß.
- Der darüberliegende Graph betrifft eine Mischung aus 9% Rot und 91 % Weiß.
- Der oberste und dunkelste Graph betrifft eine Präparation aus 100% Weiß.

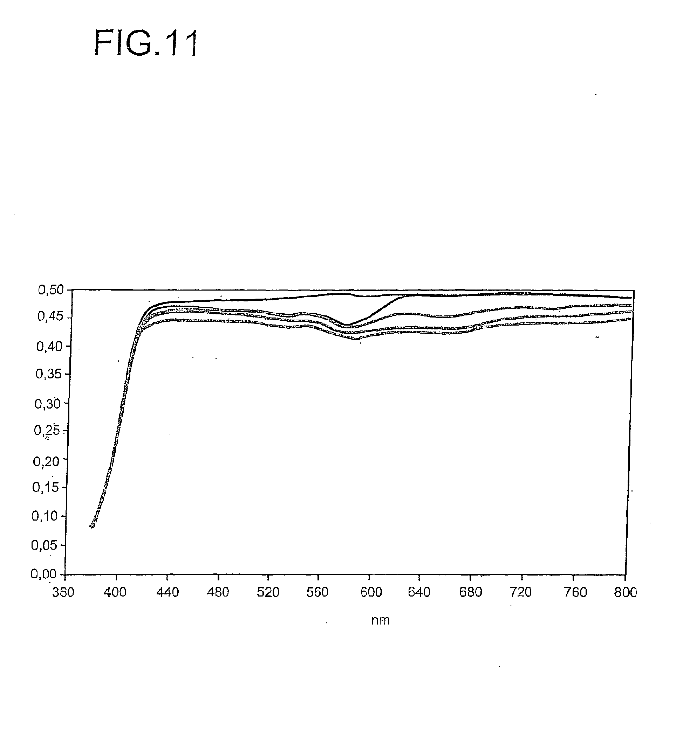

In Figur 11 ist das Ergebnis eines Empfindlichkeitstests dargestellt. Für diesen Test wurde ein Weißlack mit verschiedenen Farbpasten gemischt.

Auf der Abszisse ist die Wellenlänge in nm dargestellt und auf der Ordinate die Remission.
- Der bei einer Wellenlänge von 600 nm unterste Graph betrifft einen Weißlack mit 0,34% Schwarz.
- Der bei einer Wellenlänge von 600 nm darüberliegende Graph betrifft einen Weißlack mit 0,26% Blau.
- Der bei einer Wellenlänge von 600 nm darüberliegende Graph betrifft einen Weißlack mit 0,17% Grün.
- Der bei einer Wellenlänge von 600 nm darüberliegende Graph betrifft einen Weißlack mit 0,26% Rot.
- Der bei einer Wellenlänge von 600 nm oberste und dunkelste Graph betrifft einen reinen Weißlack.

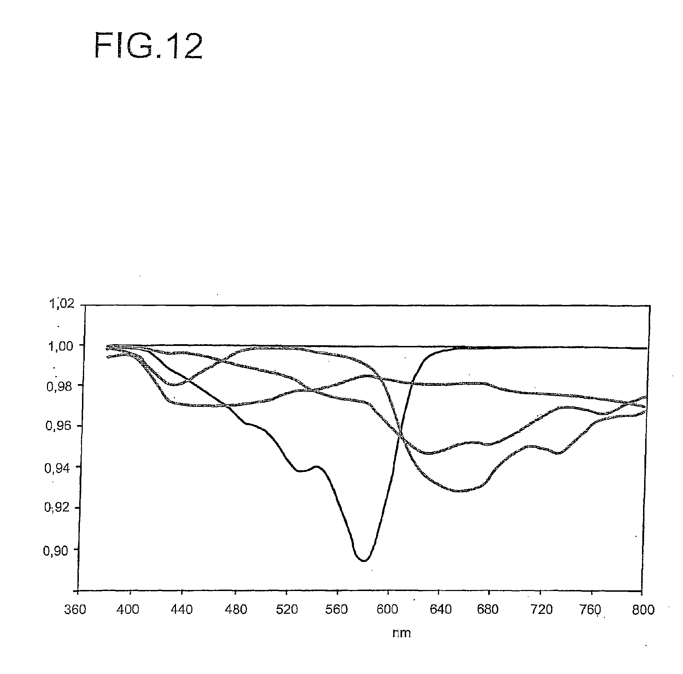

In Figur 12 ist ebenfalls das Ergebnis eines Empfindlichkeitstests dargestellt. Für diesen Test wurde - wie in Figur 11- ein Weißlack mit verschiedenen Farbpasten gemischt.

Auf der Abszisse ist die Wellenlänge in nm dargestellt und auf der Ordinate die relative Remission.
- Der bei einer Wellenlänge von 420 nm unterste Graph betrifft einen Weißlack mit 0,34% Schwarz.
- Der bei einer Wellenlänge von 420 nm darüberliegende Graph betrifft einen Weißlack mit 0,17% Grün.
- Der bei einer Wellenlänge von 420 nm darüberliegende Graph betrifft einen Weißlack mit 0,26% Rot.
- Der bei einer Wellenlänge von 420 nm darüberliegende Graph betrifft einen Weißlack mit 0,26% Blau.
- Der bei einer Wellenlänge von 420 nm darüberliegende Graph betrifft einen reinen Weißlack.

Die Farbe von flüssigen Pigmentpräparationen, bevorzugt von flüssigen Lacken unterscheidet sich deutlich von der der daraus hergestellten festen pigmentierten Oberflächen, bevorzugt des festen Lackfilms. Solange der Zusammenhang zwischen den Farbunterschieden zweier flüssiger Pigmentpräparationen, bevorzugt Lacke und den Farbunterschieden zweier fester pigmentierter Oberflächen, bevorzugt Lackfilme aber bekannt ist, ist grundsätzlich eine Messung der flüssigen Pigmentpräparationen, bevorzugt des flüssigen Lacks für eine Aussage über die Farbe der festen pigmentierten Oberflächen, bevorzugt des festen Lackfilms geeignet.

Problematisch ist dabei, dass die Farbe an der Messstelle bei flüssigen Pigmentpräparationen, bevorzugt flüssigen Lacken üblicherweise nicht.repräsentativ für dieses Pigmentpräparationen, bevorzugt diesen Lack ist, zum Beispiel auf Grund von Agglomeration, Sedimentation, Glanzreflexion an bewegten Oberflächen, etc.

Dies führt dann dazu, dass Messungen an flüssigen Pigmentpräparationen, bevorzugt flüssigen Lacken keine ausreichende Aussagekraft für die daraus hergestellten festen pigmentierten Oberflächen, bevorzugt festen Lackfilme haben.

Grundsätzlich ist also die genaue Farbmessung am lackierten Objekt am sichersten. Das bedeutet allerdings einen großen Aufwand zum Herstellen lackierter Probetafeln, verbunden mit den Schwankungen, die der Lackierprozess mit sich bringt. Durch die Bereitstellung der erfindungsgemäßen Remissionssensoren sind hochgenaue Messungen der flüssigen Proben (Pigmentpräparationen), bevorzugt Lacken, möglich. Durch die hochgenauen Messungen ist eine exakte Korrelation der Farbe der flüssigen Proben, bevorzugt Lacke, mit der Farbe der daraus erhältlichen festen pigmentierten Oberflächen, bevorzugt des Lackfilms möglich.

Der erfindungsgemäße Remissionssensor kann somit zum Beispiel in den folgenden Anwendungen eingesetzt werden:

### 1. Steuerung des Dispergierprozesses

Bei der Dispergierung von pigmentierten Lacken oder Pigmentpasten ist es heute Stand der Technik, nach Erreichen eines bestimmten Energieeintrags oder einer bestimmten Feinheit den Prozess zu stoppen. Zur Qualitätskontrolle wird eine Probe genommen, häufig ist eine Beurteilung an Hand von lackierten Probetafeln erforderlich. Durch Messung der flüssigen Pigmentpräparationen mit dem erfindungsgemäßen Remissionssensor kann auf den Lackierprozess zur Beurteilung der Farbe verzichtet werden.

### 2. Ersatz von Weißabmischungen zur Qualitätsbeurteilung von Pigmentdispersionen

Im Verlauf einer Dispergierung ändert eine Pigmentpaste ihre Remissionseigenschaften. Insbesondere bei dunklen Pigmenten ist die Remission aber so gering, dass eine Unterscheidung verschiedener Dispergierzustände in ausreichender Genauigkeit nicht möglich ist. Daher wird in der Praxis Weißpigment zugesetzt, um die Remission zu verstärken. Auf diesen fehleranfälligen Vorgang kann verzichtet werden, wenn eine genauere und empfindlichere Methode zur Remissionsmessung verfügbar ist.

### 3. Unmittelbare Qualitätsbeurteilung der Lackherstellung

Häufig ist eine Beurteilung einer Pigmentpaste oder Pigmentpastenmischung durch Applikation und Vermessung der Filmeigenschaften nicht möglich, da die Pigmentpastenmischung nicht verfilmt oder keine ausreichende Deckkraft aufweist. Das für eine Filmbildung notwendige "Auflacken" mit anderen Komponenten bringt zusätzliche Fehlerquellen mit sich. Eine hochgenaue Messung der flüssigen Pigmentpaste stellt einen unmittelbaren und damit besseren Zusammenhang zwischen Herstellprozess und Messgröße dar. Sie bietet die Möglichkeit, den Prozess der Lackherstellung allein ohne den Prozess der Lackierung zu beurteilen.

### 4. Steuerung einer Dosieranlage

Der Vorteil - Ersatz der zeitaufwendigen Herstellung von lackierten Probetafeln durch einfache Nassmessung - gilt auch bei der Fertigung von Lacken durch Mischen verschiedener Flüssigkeiten, zum Beispiel mit einer Dosieranlage. In diesem Fall wird zum Erreichen der gewünschten Farbe nicht der Dispergierprozess, sondern der Dosierprozess geregelt.

### 5. Automatisch geregelte Farbeinstellung bei der Lackproduktion

Die Einstellung eines Lackes auf eine genaue Farbe, das "Tönen" (= Zugabe von "Hilfspigmenten" zur Farbabstimmung), erfolgt heute durch manuelle Probenahme, gegebenenfalls Applikation, Messung, Zugabe von Pigmentdispersionen, in wiederholter Folge. Eine Automatisierung des Prozesses mit Hilfe einer inline-Remissionsmessung ist auf Grund der ungenügenden Genauigkeit der verfügbare Messgeräte nicht möglich. Ein inline einsetzbares Remissionsmessgerät mit hoher Genauigkeit würde die Möglichkeit zu einem automatisch gesteuerten Tönprozess eröffnen.

### 6. Farbanpassung in einer Lackieranlage

Die Farbe des Lacks lässt sich auch unmittelbar vor der Lackierung anpassen, indem in die Lackieranlage eine Dosieranlage für Farbpasten integriert wird (siehe Coloron-Demand, Fa. PPG), und die Steuerung der Zudosierung über eine Farbmessung des flüssigen Lacks erfolgt, die in diesem Fall vorzugsweise inline erfolgen sollte.

### 7. Kontrolle nachträglicher Farbänderungen

Durch Alterung oder Scherbeanspruchung können Pigmentpasten oder Lacke ihre Farbe nachträglich ändern. Eine Überwachung der Farbkonstanz mit einem - vorzugsweise inline eingesetzten - hochgenauen Messverfahren wäre hilfreich.

Ein weiterer Gegenstand der vorliegenden Anmeldung ist somit die Verwendung des erfindungsgemäßen Remissionssensors zur Remissionsmessung flüssiger Pigmentpräparationen in einer beliebigen Verfahrensstufe bei der Herstellung, Weiterverarbeitung und Anwendung von flüssigen Pigmentpräparationen, bevorzugt zur Qualitätskontrolle bei der Dispergierung von pigmentierten Lacken und Pigmentpasten, zur Qualitätsbeurteilung bei der Lackherstellung, zur Steuerung einer Dosieranlage bei der Fertigung von Lacken durch Mischen verschiedener Flüssigkeiten, zur automatisch geregelten Farbeinstellung durch Tönen bei der Lackproduktion, zur Farbanpassung der Farbe des Lacks in einer

Lackieranlage, die eine Dosieranlage für Farbpasten aufweist und/oder zur Kontrolle nachträglicher Farbänderungen durch Alterung oder Scherbeanspruchung von pigmentierten Lacken oder Pigmentpasten.

Ein weiterer Gegenstand der vorliegenden Anmeldung ist die Verwendung des erfindungsgemäßen Remissionssensors zur Durchführung des erfindungsgemäßen Verfahrens.

Ein weiterer Gegenstand der vorliegenden Anmeldung ist die Verwendung des erfindungsgemäßen Remissionssensors zur Remissionsmessung einer Probe, die eine feste pigmentierte Oberfläche aufweist, zum Beispiel eines Blechs, einer Folie oder eines Kunststoffs.

Mit Hilfe des erfindungsgemäßen Remissionssensors sowie des erfindungsgemäßen Verfahrens ist eine genaue und schnelle Bestimmung der Remission von flüssigen Pigmentpräparationen, insbesondere von Lacken, Pigmentpasten und Weißabmischungen möglich, die gegenüber der ebenfalls hochgenauen Messung (dE - 0,1) an gespritzten Flächen eine erhebliche, wirtschaftlich relevante Zeitersparnis bietet.

Die Möglichkeit, mit der gleichen Optik auch feste Proben, z. B. Bleche, in definiertem Abstand und in definierter Ausrichtung zu messen, ist eine Besonderheit der planen Ausführung des Messfensters und der abnehmbaren Produktzelle. Diese Möglichkeit erlaubt eine einfache Übertragung von Nassmessungen auf Trockenmessungen.

## Patentansprüche

1. Remissionssensor, aufgebaut aus
a) einer optischen Einheit, die
aa) eine Lichtquelle in Form einer Lampe, und
ab) eine Faseroptik umfassend Lichtwellenleiter, wobei mindestens ein Lichtwellenleiter ein Referenzleiter ist,
umfasst,
b) einer Probenanalyseeinheit, die
ba) ein Messfenster, und
bb) eine Probenanalysezelle,
umfasst,
wobei auf einer Seite des Messfensters die optische Einheit angeordnet ist und auf der anderen Seite des Messfensters die Probenanalysezelle angeordnet ist, indem diese so an das Messfenster angepresst ist, dass ein Spalt zwischen Messfenster und Probenanalysezelle gebildet wird, den eine zu messende Probe in Form einer flüssigen Pigmentpräparation durchqueren muss, wobei bei der Durchquerung des Spalts eine erhebliche Scherung der Probe erfolgt,
und
c) einer System-Kontrolleinheit umfassend Detektoren zur Aufnahme von Messdaten und ein daran angeschlossenes Auswertegerät,
wobei mindestens eine Lichtwellenleiterverbindung von der Lichtquelle zu dem Messfenster und von dem Messfenster weiter zum Detektor geführt wird, zur Erzeugung eines Messsignals, und mindestens eine Referenzleiterverbindung direkt von der Lichtquelle zum Detektor oder vom Messfenster zum Detektor geführt wird, zur Erzeugung eines Referenzsignals, **dadurch gekennzeichnet, dass** die Probenanalysezelle abnehmbar ist.

2. Remissionssensor nach Anspruch 1, **dadurch gekennzeichnet, dass** die Lampe ausgewählt ist aus der Gruppe bestehend aus LED's, Gasentladungslampen und Lampen mit Glühwendel.

3. Remissionssensor nach Anspruch 1 oder 2, **dadurch gekennzeichnet, dass** die Lampe einen integrierten Shutter aufweist.

4. Remissionssensor nach einem der Anspruche 1 bis 3, **dadurch gekennzeichnet, dass** die Lichtwellenleiter Fasern mit 100, 200, 400, 600 oder 800 µm Faserdurchmesser sind.

5. Remissionssensor nach einem der Ansprüche 1 bis 4, **dadurch gekennzeichnet, dass** die als Referenzleiter eingesetzte Faser einen angepassten, bevorzugt kleineren Durchmesser aufweist als die übrigen Lichtwellenleiter.

6. Remissionssensor nach einem der Anspruche 1 bis 5, **dadurch gekennzeichnet, dass** er zusätzlich mindestens eines der folgenden Merkmale aufweist:
ac) hinter der Lampe ist ein Kompensationsfilter angeordnet, der das Spektrum der Lampe so linearisiert, dass der Unterschied zwischen höchster und niedrigster Intensität des von der Lampe ausgestrahlten Lichts möglichst klein, zum Beispiel maximal Faktor 4 ist,
ad) hinter der Lampe - bei Einsatz eines Kompensationsfilters zwischen Lampe und Kompensationsfilter - ist ein IR-Sperrfilter, ein Kondensator und eine Streuscheibe angeordnet,
ae) die Lichtwellenleiter werden in Schutzschläuchen geführt und auf voller Länge mittels eines Stützgestells gestützt,
af) der Referenzleiter wird über ein präzises Abstandselement mit eingebauter Streuscheibe geführt, und definiert abgeschwächt.

7. Remissionssensor nach einem der Ansprüche 1 bis 6, **dadurch gekennzeichnet, dass** das Messfenster eine Planplatte ist, bevorzugt eine Planplatte aus Glas, Halbedelsteinen oder Diamant, besonders bevorzugt mit 1 bis 12 mm Dicke und 10 bis 80 mm Durchmesser.

8. Remissionssensor nach einem der Ansprüche 1 bis 7, **dadurch gekennzeichnet, dass** der Spalt 2 bis 15 mm lang ist, 2 bis 40 mm breit ist und zwischen 0,05 und 5 mm hoch ist, wobei die genaue Höhe bevorzugt variabel einstellbar ist.

9. Remissionssensor nach einem der Ansprüche 1 bis 8, **dadurch gekennzeichnet, dass** die erhebliche Scherung der Probe durch einen Druckabfall in dem Spalt von der Eintrittsstelle der Probe in den Spalt bis zu ihrer Austrittsstelle von 0,1 bis 3 bar auf 1 bis 15 mm Länge, bevorzugt 0,5 bis 1 bar, auf 1 bis 5 mm Länge erreicht wird.

10. Remissionssensor nach einem der Ansprüche 1 bis 9, **dadurch gekennzeichnet, dass** die System-Kontrolleinheit Detektoren in Form von faseroptischen monolithischen Diodenzeilensensoren aufweist, die eine Auflösung von wenigstens 15 bit ermöglichen.

11. Remissionssensor nach einem der Ansprüche 1 bis 10, **dadurch gekennzeichnet, dass** alle Einheiten des Remissionssensors in einem gemeinsamen Gehäuse untergebracht sind, in dem eine Ventilation und eine thermostatgeregelte Wärmeabfuhr erfolgt.

12. Verfahren zur Messung der Remission einer Probe in Form einer flüssigen Pigmentpräparation mit einem Remissionssensor gemäß einem der Ansprüche 1 bis 11, umfassend:
i) Ausbildung eines Probenstroms mit definierter Dicke,
ii) Bestrahlung des Probenstroms mit von einer Lichtquelle ausgesandter elektromagnetischer Strahlung, wobei die elektromagnetische Strahlung mit der Probe in Wechselwirkung tritt und ein Teil der Strahlung nach Wechselwirkung mit der Probe diffus reflektiert wird,
iii) Empfangen und Erfassen der diffus reflektierten Strahlung als Remissionssignal,
iv) Empfangen und Erfassen eines Referenzsignals, wobei das Referenzsignal von derselben Lichtquelle, die zur Bestrahlung des Probenstroms dient, ausgesandte elektromagnetische Strahlung ist, die nicht mit der Probe in Wechselwirkung tritt,
wobei das Remissionssignal und das Referenzsignal simultan erfasst werden.

13. Verwendung eines Remissionssensors nach einem der Ansprüche 1 bis 11 zur Messung der Remission einer Probe in Form einer flüssigen Pigmentpräparation.

14. Verwendung eines Remissionssensors nach einem der Ansprüche 1 bis 11 zur Remissionsmessung flüssiger Pigmentpräparationen in einer beliebigen Verfahrensstufe bei der Herstellung, Weiterverarbeitung und Anwendung von flüssigen Pigmentpräparationen, bevorzugt zur Qualitätskontrolle bei der Dispergierung von pigmentierten Lacken und Pigmentpasten, zur Qualitätsbeurteilung bei der Lackherstellung, zur Steuerung einer Dosieranlage bei der Fertigung von Lacken durch Mischen verschiedener Flüssigkeiten, zur automatisch geregelten Farbeinstellung durch Tönen bei der Lackproduktion, zur Farbanpassung der Farbe des Lacks in einer Lackieranlage, die eine Dosieranlage für Farbpasten aufweist und/oder zur Kontrolle nachträglicher Farbänderungen durch Alterung oder Scherbeanspruchung von pigmentierten Lacken oder Pigmentpasten.

## Claims

1. Reflectance sensor, built up from
a) an optical unit which comprises
aa) a light source in the form of a lamp, and
ab) a fiber-optic system comprising optical waveguides, at least one optical waveguide being a reference waveguide,
b) a sample analysis unit, which comprises
ba) a measuring window, and
bb) a sample analysis cell,
the optical unit being arranged on one side of the measuring window and the sample analysis cell being arranged on the other side of the measuring window, by said cell being pressed against the measuring window in such a way that, between measuring window and sample analysis cell, a gap is formed which must be traversed by a sample to be measured in the form of a liquid pigment preparation, the sample being sheared considerably as it traverses the gap,
and
c) a system control unit comprising detectors for recording measured data and an evaluation device connected thereto,
at least one optical waveguide connection being led from the light source to the measuring window and from the measuring window onward to the detector, to generate a measured signal, and at least one reference waveguide connection being led directly from the light source to the detector or from the measuring window to the detector to produce a reference signal, **characterized in that** the sample analysis cell is removable.

2. Reflectance sensor according to Claim 1, **characterized in that** the lamp is chosen from the group consisting of LEDs, gas discharge lamps and lamps with incandescent filaments.

3. Reflectance sensor according to Claim 1 or 2, **characterized in that** the lamp has an integrated shutter.

4. Reflectance sensor according to one of Claims 1 to 3, **characterized in that** the optical waveguides are fibers of 100, 200, 400, 600 or 800 µm fiber diameter.

5. Reflectance sensor according to one of Claims 1 to 4, **characterized in that** the fiber used as a reference waveguide has a diameter matched to, preferably smaller than, the remaining optical waveguides.

6. Reflectance sensor according to one of Claims 1 to 5, **characterized in that** it additionally has at least one of the following features:
ac) arranged behind the lamp is a compensation filter, which linearizes the spectrum from the lamp such that the difference between the highest and lowest intensity of the light emitted by the lamp is as small as possible, for example at most a factor 4,
ad) an IR blocking filter, a condenser and a scattering disk are arranged behind the lamp - between lamp and compensation filter if a compensation filter is used,
ae) the optical waveguides are led in protective tubes and supported over their entire length by means of a supporting frame,
af) the reference waveguide is led via a precise spacing element with incorporated scattering disk, and attenuated in a defined manner.

7. Reflectance sensor according to one of Claims 1 to 6, **characterized in that** the measuring window is a plane plate, preferably a plane plate of glass, semi-precious stones or diamond, particularly preferably 1 to 12 mm thick and 10 to 80 mm diameter.

8. Reflectance sensor according to one of Claims 1 to 7, **characterized in that** the gap is 2 to 15 mm long, 2 to 40 mm wide and between 0.05 and 5 mm high, the exact height preferably being variably adjustable.

9. Reflectance sensor according to one of Claims 1 to 8, **characterized in that** the considerable shearing of the sample is achieved by a pressure drop in the gap from the entry point of the sample into the gap as far as its exit point of 0.1 to 3 bar over 1 to 15 mm length, preferably 0.5 to 1 bar over 1 to 5 mm length.

10. Reflectance sensor according to one of Claims 1 to 9, **characterized in that** the system control unit has detectors in the form of fiber-optic monolithic diode-line sensors which permit a resolution of at least 15 bits.

11. Reflectance sensor according to one of Claims 1 to 10, **characterized in that** all the units of the reflectance sensor are accommodated in a common housing, in which ventilation and thermostat-controlled heat dissipation are carried out.

12. Method of measuring the reflectance of a sample in the form of a liquid pigment preparation with a reflectance sensor according to one of Claims 1 to 11, comprising:
i) forming a sample stream with a defined thickness,
ii) irradiating the sample stream with electromagnetic radiation emitted by a light source, the electromagnetic radiation interacting with the sample and some of the radiation being reflected diffusely following interaction with the sample,
iii) receiving and registering the diffusely reflected radiation as a reflectance signal,
iv) receiving and registering a reference signal, the reference signal being electromagnetic radiation emitted by the same light source which serves to irradiate the sample stream but which does not interact with the sample,
the reflectance signal and the reference signal being registered simultaneously.

13. Use of a reflectance sensor according to one of Claims 1 to 11 for measuring the reflectance of a sample in the form of a liquid pigment preparation.

14. Use of a reflectance sensor according to one of Claims 1 to 11 for measuring the reflectance of liquid pigment preparations in any desired process stage in the production, further processing and the use of liquid pigment preparations, preferably for quality control during the dispersion of pigmented coatings and pigment pastes, for quality assessment during coating production, for controlling a metering system during the formulation of coatings by mixing various liquids, for automatically controlled color adjustment by means of tinting during coating production, for matching the color of the coating in a coating system which has a metering system for colored pastes and/or for monitoring subsequent color changes as a result of ageing or shear stressing of pigmented coatings or pigment pastes.

## Revendications

1. Détecteur de réflexion spectrale constitué de:
a) une unité optique qui comporte
aa) une source de lumière qui présente la forme d'une lampe et
ab) une optique à fibres qui comprend des conducteurs d'ondes lumineuses, au moins un conducteur d'ondes lumineuses étant un conducteur de référence,
b) une unité d'analyse d'échantillons qui comprend
ba) une fenêtre de mesure et
bb) une cellule d'analyse d'échantillons,
l'unité optique étant disposée sur un côté de la fenêtre de mesure et la cellule d'analyse d'échantillons étant disposée sur l'autre côté de la fenêtre de mesure, repoussée contre la fenêtre de mesure de manière à former entre la fenêtre de mesure et la cellule d'analyse d'échantillons un interstice que doit traverser l'échantillon à mesurer qui présente la forme d'une préparation pigmentée liquide, l'échantillon subissant un fort cisaillement lorsqu'il traverse l'interstice, et
c) une unité de contrôle de système qui comprend des détecteurs d'enregistrement de données de mesure et à laquelle est raccordé un appareil d'évaluation,
au moins une liaison par conducteur d'ondes lumineuses étant formée entre la source de lumière et la fenêtre de mesure et étant prolongée au-delà de la fenêtre de mesure jusqu'au détecteur pour former un signal de mesure,
au moins une liaison de conducteur de référence étant formée entre la source de lumière et le détecteur ou entre la fenêtre de mesure et le détecteur pour former un signal de référence,
**caractérisé en ce que**
la cellule d'analyse d'échantillons est amovible.

2. Détecteur de réflexion spectrale selon la revendication 1, **caractérisé en ce que** la lampe est sélectionnée dans l'ensemble constitué des LED, des lampes à décharge dans un gaz et des lampes à filament incandescent.

3. Détecteur de réflexion spectrale selon les revendications 1 ou 2, **caractérisé en ce qu'**un obturateur est intégré à la lampe.

4. Détecteur de réflexion spectrale selon l'une des revendications 1 à 3, **caractérisé en ce que** les conducteurs d'ondes lumineuses sont des fibres d'un diamètre de 100, 200, 400, 600 ou 800 µm.

5. Détecteur de réflexion spectrale selon l'une des revendications 1 à 4, **caractérisé en ce que** les fibres utilisées comme conducteur de référence présentent un diamètre adapté, de préférence plus petit que celle des autres conducteurs d'ondes lumineuses.

6. Détecteur de réflexion spectrale selon l'une des revendications 1 à 5, **caractérisé en ce qu'**il présente en outre au moins l'une des caractéristiques suivantes :
ac) un filtre de compensation qui linéarise le spectre de la lampe de telle sorte que la différence entre l'intensité la plus élevée et l'intensité la plus basse de la lumière émise par la lampe soit aussi petite que possible, et par exemple d'un facteur 4, est disposé en aval de la lampe,
ad) lorsqu'un filtre de compensation est utilisé entre la lampe et le filtre de compensation, un filtre de blocage de l'IR, un concentrateur et une vitre de dispersion sont disposés en aval de la lampe,
ae) les conducteurs d'ondes lumineuses sont passés dans des gaines de protection et sont soutenus sur toute leur longueur par un bâti de soutien,
af) le conducteur de référence est passé au-dessus d'un élément d'écartement précis dans lequel est incorporée une vitre de dispersion et est atténué de manière définie.

7. Détecteur de réflexion spectrale selon l'une des revendications 1 à 6, **caractérisé en ce que** la fenêtre de mesure est une plaque plane, de préférence une plaque plane en verre, en pierre semi-précieuse ou en diamant, et **en ce qu'**elle présente de façon particulièrement préférable une épaisseur de 1 à 12 mm et un diamètre de 10 à 80 mm.

8. Détecteur de réflexion spectrale selon l'une des revendications 1 à 7, **caractérisé en ce que** l'interstice a une longueur de 2 à 15 mm, une largeur de 2 à 40 mm et une hauteur comprise entre 0,05 et 5 mm, la hauteur précise pouvant de préférence être ajustée.

9. Détecteur de réflexion spectrale selon l'une des revendications 1 à 8, **caractérisé en ce que** le fort cisaillement de l'échantillon est obtenu par une perte de charge dans l'interstice entre l'emplacement d'entrée de l'échantillon dans l'interstice jusqu'à son emplacement de sortie d'une valeur de 0,1 à 3 bars sur une longueur de 1 à 15 mm et de préférence de 0,5 à 1 bar sur une longueur de 1 à 5 mm.

10. Détecteur de réflexion spectrale selon l'une des revendications 1 à 9, **caractérisé en ce que** l'unité de contrôle du système présente des détecteurs qui ont la forme de détecteurs monolithiques à lignes de diodes et fibres optiques qui permettent une résolution d'au moins 15 bits.

11. Détecteur de réflexion spectrale selon l'une des revendications 1 à 10, **caractérisé en ce que** toutes les unités du détecteur de réflexion spectrale sont placées dans un boîtier commun dans lequel sont réalisées une ventilation et une évacuation thermostatisée de chaleur.

12. Procédé de mesure de la réflexion spectrale d'un échantillon qui présente la forme d'une préparation pigmentée liquide à l'aide d'un détecteur de réflexion spectrale selon l'une des revendications 1 à 11, et comprenant les étapes qui consistent à :
i) former un écoulement d'échantillon d'une épaisseur définie,
ii) irradier l'écoulement d'échantillon avec un rayonnement électromagnétique émis par une source de lumière, le rayonnement électromagnétique entrant en interaction avec l'échantillon et une partie du rayonnement étant réfléchie après interaction avec l'échantillon,
iii) recevoir et détecter le rayonnement diffus réfléchi qui forme le signal de réflexion spectrale,
iv) recevoir et détecter un signal de référence, le signal de référence étant un rayonnement électromagnétique émis par la même source de lumière que celle utilisée pour irradier l'écoulement d'échantillon et qui n'entre pas en interaction avec l'échantillon,
le signal de réflexion spectrale et le signal de référence étant détectés simultanément.

13. Utilisation d'un détecteur de réflexion spectrale selon l'une des revendications 1 à 11 pour la mesure de la réflexion spectrale d'un échantillon qui présente la forme d'une préparation liquide pigmentée.

14. Utilisation d'un détecteur de réflexion spectrale selon l'une des revendications 1 à 11 pour la mesure de la réflexion spectrale de préparations liquides pigmentées dans une étape quelconque de procédé lors de la fabrication, la transformation et l'utilisation de préparations liquides pigmentées, de préférence pour le contrôle de qualité dans la dispersion de peintures pigmentées et d'enduits pigmentés, dans l'évaluation de la qualité en fabrication de peintures, dans la commande d'une installation de dosage de préparation de peintures par mélange de différents liquides, dans l'établissement régulé automatiquement de la teinte dans la coloration en production de peintures, pour l'adaptation de la teinte de la peinture dans une installation de peinture qui présente une installation de dosage des enduits colorées et/ou dans le contrôle de modifications ultérieures de la teinte par vieillissement ou sollicitation de cisaillement de peintures pigmentées ou d'enduits pigmentés.
